(19) Europäisches Patentamt
European Patent Office
Office européen des brevets

(11) EP 2 766 374 B1

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **12778072.4**

(22) Anmeldetag: **09.10.2012**

(51) Int Cl.:
***C07F 7/18*** *(2006.01)* ***C08G 77/20*** *(2006.01)*
***C08G 77/22*** *(2006.01)*

(86) Internationale Anmeldenummer:
**PCT/EP2012/069940**

(87) Internationale Veröffentlichungsnummer:
**WO 2013/053693 (18.04.2013 Gazette 2013/16)**

(54) **KIESELSÄUREPOLYKONDENSATE MIT CYCLISCHEN OLEFINHALTIGEN STRUKTUREN, VERFAHREN ZU DEREN HERSTELLUNG SOWIE DEREN VERWENDUNG**

SILICIC ACID POLYCONDENSATES HAVING CYCLIC OLEFIN-CONTAINING STRUCTURES, METHOD FOR THE PRODUCTION THEREOF, AND USE THEREOF

POLYCONDENSATS D'ACIDE SILICIQUE AVEC DES STRUCTURES CYCLIQUES D'OLÉFINE, PROCÉDÉ POUR LEUR FABRICATION, ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2011 DE 102011054440**

(43) Veröffentlichungstag der Anmeldung:
**20.08.2014 Patentblatt 2014/34**

(73) Patentinhaber:
- **Wolter, Herbert**
  **97941 Tauberbischofsheim (DE)**
- **Nique, Somchith**
  **97249 Eisingen (DE)**
- **Bausen, Denise**
  **7260 Davos Dorf (CH)**

(72) Erfinder:
- **WOLTER, Herbert**
  **97941 Tauberbischofsheim (DE)**
- **NIQUE, Somchith**
  **97249 Eisingen (DE)**
- **BAUSEN, Denise**
  **7324 Vilters-Wangs (CH)**

(74) Vertreter: **Strehl Schübel-Hopf & Partner**
**Maximilianstrasse 54**
**80538 München (DE)**

(56) Entgegenhaltungen:
**WO-A1-2005/040249**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 766 374 B1

**Beschreibung**

Die vorliegende Erfindung betrifft Kieselsäure(hetero)polykondensate mit cyclischen olefinhaltigen Strukturen, aus denen sich Polymerwerkstoffe mit in weiten Grenzen einstellbaren E-Moduli bei hoher elastischer Dehnung (d.h. ohne Sprödverhalten) und damit einer hohen Bruchzähigkeit herstellen lassen. Die Erfindung betrifft auch die Herstellung der Kondensate sowie deren Verwendungsmöglichkeiten.

Solche Materialien werden z.B. in der Oralmedizin benötigt, die sehr unterschiedliche Anforderungen hinsichtlich E-Modul bei einer gegebenen Materialgrundlage durch minimale Modifikationen innerhalb der Grundstruktur stellt, wobei die Härtungsmechanismen nach Möglichkeit jeweils dieselben sein sollten. Ein Ziel ist es dabei, die Anzahl der benötigten Materialklassen bzw. -typen insgesamt zu reduzieren, um das Allergiepotential z.B. in der Oralchirurgie und Dentalmedizin möglichst gering zu halten. Einfache Syntheseprinzipien ohne komplizierte, empfindliche Reaktionen und damit eine auch großtechnisch leicht zugängliche Materialbasis sind dabei von besonderer Bedeutung. Eine geringe Schrumpfung, eine hohe Empfindlichkeit gegenüber den gewählten Härtungsparametern als Möglichkeit für eine sensible Einstellung der Härtungsgeschwindigkeit bei dennoch guter Lagerstabilität, die Abwesenheit möglicherweise toxischer oder allergener Monomere in den polymeren Produkten sowie gegebenenfalls eine einfache, problemlose Sterilisierbarkeit sind dabei ebenfalls wünschenswert.

Im Bereich der dentalen Werksstoffe, aber nicht nur dort, ist es wichtig, eine Palette von Materialien bereitstellen zu können, die zwar dem Grunde nach für dieselben Zwecke verwendet werden können und dieselben physikalischen und mechanischen Eigenschaften besitzen, wobei diese Eigenschaften jedoch an spezifische, häufig sogar individuelle Anforderungen detailgenau angepasst werden müssen. Beispiele sind die Matrixhydrophilie, die Schrumpfung und die Reaktivität gegenüber Substraten oder weiteren Matrix- oder Komposit-Bestandteilen wie Zahngewebe, Co-Reaktanten oder Reaktionspartnern in Ionomer-Kompositen. Hier haben minimale Veränderungen häufig eine große Wirkung. Kann der mit diesen Materialien arbeitende Spezialist, beispielsweise ein Zahnarzt oder ein Zahntechniker, auf eine abgestufte Palette der für seine Zwecke erforderlichen Materialien zurückgreifen, wird er in die Lage versetzt, für jede einzelne Applikation das genau dazu passende Material auszuwählen.

In den vergangenen 20 Jahren wurde eine Vielzahl von Silanen entwickelt, die nicht nur hydrolytisch kondensierbar sind, sondern, beispielsweise über reaktive Doppelbindungen oder cyclische olefinhaltige Strukturen, zusätzlich einer organischen Polymerisation unterworfen werden können. Über die Anzahl der Doppelbindungen bzw. Ringe sowie das Vorhandensein ggf. weiterer reaktiver Gruppen lässt sich eine Vielzahl von Kondensaten, Polymeren und Kompositen aus bzw. mit diesen Silanen herstellen, die sich für eine Vielzahl von Applikationen eignen. Beispiele solcher Materialien sind in DE 44 16 857 C1, DE 196 27 198 und DE 103 49 766 A1 offenbart. Allerdings erfüllen diese Materialien nicht die vorstehenden Bedürfnisse. WO 2005/040249 offenbart Kieselsäurepolyteilkondensate. Aufgabe der Erfindung ist es, hier Abhilfe zu schaffen und Kieselsäure(hetero)polykondensate (auch als Siloxane bzw. "Ormocer®e" bezeichnet) bereitzustellen, die ausgehend von einem Grundmaterial durch an kontrollierter Stelle eingeführte reaktive Gruppen hinsichtlich ihrer Variabilität bei der Weiterverarbeitung (Härtung), z.B. durch abgestufte Härtungsgeschwindigkeiten, und/oder aufgrund unterschiedlicher Ätz- oder Haftungseigenschaften oder unterschiedlicher E-Moduli Vorteile bieten. In bevorzugten Ausführungsformen sollen darüber hinaus unterschiedlich reaktive Gruppen in ein und demselben Material zur Verfügung stehen, um unterschiedliche Härtungsmechanismen anwenden zu können. Diese Materialien sollen sich für vielerlei Zwecke, darunter im Dentalbereich und im Medizinsektor, z.B. als dentales Restaurations-, Prophylaxematerial oder Knochenersatzmaterial, eignen.

In Lösung der gestellten Aufgabe stellt die vorliegende Erfindung ein Kieselsäure(hetero)polykondensat bereit, umfassend Strukturen der nachfolgenden Formel (1)

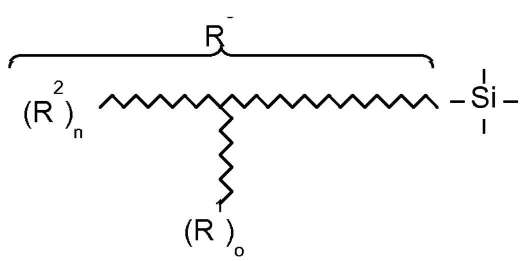

(1)

worin die Reste und Indices die folgende Bedeutung besitzen:

$R^1$ bezeichnet eine Gruppe, die bei Zusatz eines Thiols einer Thiol-en-Polyaddition zugänglich ist und außerdem durch eine ROMP (ring opening metathese polymerization) polymerisiert werden kann,

$R^2$ ist ausgewählt unter

(a) organisch polymerisierbaren Gruppen, die bei Zusatz eines Thiols einer Thiol-en-Polyaddition zugänglich sind,

aber keiner ROMP zugänglich sind,

(b) $-COOR^8$ mit $R^8$ gleich $R^4$ oder $M^{x+}_{1/x}$,

(c) -OH, -COOH

(d) $-(O)_bP(O)(R^5)_2$, worin b gleich 0 oder 1 ist, $-SO_3M^{x+}_{1/x}$, $NR^7_2$ oder $NR^7_3{}^+$, wobei $M^{x+}$ ein x-fach positiv geladenes Metallkation mit x vorzugsweise = 1, 2, 3 oder 4 ist,

$R^4$ ein unsubstituierter oder substituierter Kohlenwasserstoffrest ist,

die Reste $R^5$ unabhängig voneinander einen unsubstituierten oder substituierten Kohlenwasserstoffrest oder $OR^6$ bedeuten und

$R^6$ Wasserstoff oder ein unsubstituierter oder substituierter Kohlenwasserstoffrest ist,

$R^7$ entweder dieselbe Bedeutung wie $R^4$ hat oder zwei Reste $R^7$ zusammen eine zweibindige, gegebenenfalls beliebig substituierte, gegebenenfalls ungesättigte (auch aromatische) Kohlenwasserstoffgruppe bedeuten; demnach können $NR^7_2$ und $NR^7_3{}^+$ z.B. auch ein Pyridin-Rest oder der Rest einer cyclischen Ammoniumverbindung oder eines Pyridinium-Derivats oder dgl. sein. Reste $R^2$ mit der Bedeutung $NR^7_2$ oder $NR^7_3{}^+$ können wichtige zusätzliche Funktionen in einem erfindungsgemäß hergestellten Harz haben. So entsteht im Falle von $NR^7_2$ ein Aktivatormolekül, das für eine Redox-Härtung genutzt werden kann. Verbindungen bzw. Harze mit $NR^7_3{}^+$-Resten zeigen eine antimikrobielle Wirkung.

$R^3$ bezeichnet einen über ein Kohlenstoffatom an das Siliciumatom der Formel (1) gebundenen Rest, an den der Rest $R^1$ o-fach und der Rest $R^2$ n-fach angebunden vorliegt und der in ein und demselben Kondensat gleich ist oder unterschiedliche Bedeutungen hat,

jeder der Indices n und o bedeutet 0, 1, 2 oder größer 2 mit der Maßgabe, dass n + o mindestens 2 bedeuten, wobei

jeder Rest $R^3$ der Struktur (1) mindestens eine Gruppe $R^1$ oder eine Gruppe $R^2$ mit der unter (a) angegebenen Bedeutung aufweisen muss und

(i) dann, wenn die Reste $R^3$ gleich sind,

(x) jeder Rest mindestens eine Gruppe $R^1$ und entweder eine Gruppe $R^2$ mit der unter (a) angegebenen Bedeutung oder eine zweite Gruppe $R^1$ aufweist (d.h. in diesen Fällen ist o = 2 oder größer 2), wobei in beiden Fällen n mindestens 1 sein muss, oder

(xx) wenn zusätzlich n gleich 0 ist, mindestens zwei Gruppen $R^1$ eine unterschiedliche Bedeutung besitzen, und

(ii) dann, wenn die Reste $R^3$ unterschiedlich sind, ein erster Teil der Reste mindestens eine Gruppe $R^1$ aufweist und eine der beiden folgenden Bedingungen eingehalten sein muss:

(x) ein weiterer Teil der Reste weist mindestens eine Gruppe $R^2$ mit der unter (a) oder (d) angegebenen Bedeutung auf, und

(xx) zwei verschiedene Reste $R^3$ weisen jeweils mindestens eine Gruppe $R^1$ auf (d.h. o = 1 oder größer 1).

Für den Fall, dass n eine Zahl >1 bedeutet, können die Gruppen $R^2$ unterschiedliche Bedeutungen besitzen.

In der Formel (1) steht die Zickzacklinie für das Rückgrat eines über ein Kohlenstoffatom an das Siliciumatom gebundenen Kohlenwasserstoffrestes, wobei dieses Rückgrat beliebig durch Heteroatome oder Kupplungsgruppen oder andere, Heteroatome enthaltende Gruppen unterbrochen sein darf. Beispiele sind Unterbrechungen durch -S-, -O-, -NH-, -C(O)O-, -NHCH(O)-, -C(O)NH- und dergleichen. Da es für die Zwecke der Erfindung auf die Struktur des Rückgrats dieses Restes nicht ankommt, kann der Fachmann diesbezüglich eine beliebige Auswahl treffen.

Die Gruppe $R^1$ ist vorzugsweise ein cycloolefinischer, stärker bevorzugt ein bicycloolefinischer Rest und ganz besonders bevorzugt der Norbornenylrest. Geeignete Beispiele sind

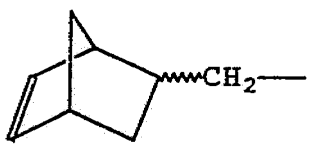
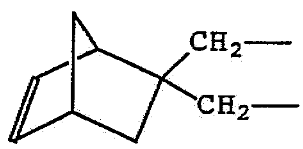

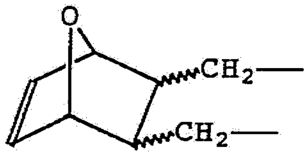 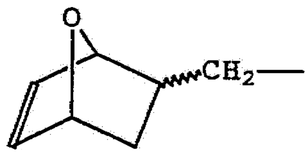

Der cycloolefinische Rest kann dabei direkt oder über eine Kupplungsgruppe an das Kohlenstoffskelett des kohlenwasserstoffhaltigen Restes gebunden sein. Beispiele, über welche Gruppen und Reste dieser Rest an das Silicium gebunden sein kann, finden sich u.a. in DE 196 27 198 A1; dort sind genannt: $-(CHR^6-CHR^6)_n-$ mit n = 0 oder 1, $-CHR^6-CHR^6-S-R^5-$, $-C(O)-S-R^5-$, $-CHR^6-CHR^6-NR^6-R^5$, $-Y-C(S)-NH-R^5$, $-S-R^5-$, $-Y-C(O)-NH-R^5-$, $-C(O)-O-R^5-$, $-Y-CO-C_2H_3(COOH)-R^5-$, $-Y-CO-C_2H_3(OH)-R^5-$ und $-C(O)-NR^6-R^5-$, wobei $R^5$ in diesem Zusammenhang ein Alkylen, Arylen, Arylenalkylen oder Arylenalkylen und $R^6$ Wasserstoff, Alkyl oder Aryl mit vorzugsweise 1 bis 10 Kohlenstoffatomen sein kann.

Wenn die Gruppe $R^2$ eine organisch polymerisierbare Gruppe bedeutet, soll unter hierunter zu verstehen sein, dass diese Gruppe einer Polyreaktion zugänglich ist, bei der reaktionsfähige Doppelbindungen unter dem Einfluss von Wärme, Licht, ionisierender Strahlung oder redoxinduziert (z.B. mit einem Initiator (Peroxid oder dgl.) und einem Aktivator (Amin oder dgl.)) in Polymere übergehen (engl.: addition polymerization oder chain-growth polymerization). Bei der Polymerisation treten weder Abspaltungen von molekularen Bestandteilen auf, noch Wanderungen oder Umlagerungen. Diese Gruppen sollten besonders bevorzugt außerdem bei Zusatz eines Thiols einer Thiol-en-Polyaddition zugänglich sein. Die reaktionsfähige(n) Doppelbindung(en) dieser Gruppe kann/können beliebig ausgewählt werden, beispielsweise eine Vinylgruppe oder Bestandteil einer Allyl- oder Styrylgruppe sein. Bevorzugt ist/sind sie Bestandteil einer Doppelbindung, die einer Michael-Addition zugänglich ist, enthält/enthalten also eine infolge der Nachbarschaft zu einer Carbonylgruppe aktivierte Methylengruppe. Unter diesen wiederum besonders bevorzugt sind Acrylsäure- und Methacrylsäuregruppen bzw. -derivate. Die Gruppe $R^2$ enthält in der Regel mindestens zwei und vorzugsweise bis zu ca. 50 Kohlenstoffatome. Die organisch polymerisierbare Gruppe $R^2$ kann direkt oder über eine beliebige Kupplungsgruppe an das Kohlenstoffskelett des kohlenwasserstoffhaltigen Restes gebunden sein.

Der Ausdruck "(Meth)Acryl..." soll vorliegend bedeuten, dass es sich jeweils um die entsprechende Acryl- oder die entsprechende Methacryl-Verbindung oder ein Gemisch von beiden handeln kann. Die vorliegenden (Meth)Acrylsäure-Derivate umfassen die Säuren selbst, ggf. in aktivierter Form, Ester, Amide, Thioester und dgl..

Die Kohlenwasserstoffreste der vorliegenden Erfindung können in allen Fällen beispielsweise geradkettige, verzweigte oder cyclische Alkyl-, Alkenylreste, Aryl-, Alkylaryl- oder Arylalkylreste sein. Häufig weisen die nicht-cyclischen Reste 1 bis 100, bevorzugt 1 bis 30 und stärker bevorzugt 1 bis 4 oder bis 6 Kohlenstoffatome auf, während es bei den anderen Resten 5 bis 100, bevorzugt 6 bis 50 und stärker bevorzugt 6 bis 12 Kohlenstoffatome sind.

Mindestens eine der drei nicht näher gekennzeichneten Bindungen des Si-Atom steht für eine Sauerstoffbrücke zu weiteren Siliciumatomen bzw. anderen Metallatomen, sofern es sich um eine Heterokondensat handelt. Auch die anderen beiden Bindungen können diese Bedeutung haben; alternativ können sie für eine OH-Gruppe, eine hydrolysierbare Gruppe oder für einen über Kohlenstoff an das Siliciumatom gebundenen Rest stehen, der beliebige Eigenschaften aufweisen kann. Diese kann von denen des Restes $R^3$ abweichen und z.B. ein substituierter oder unsubstituierter Kohlenwasserstoffrest sein; alternativ kann einer oder können sogar zwei solche Reste die Bedeutung von $R^3$ haben.

Die Indices n und o können unabhängig voneinander 0, 1 oder 2 bedeuten, gegebenenfalls aber auch 3, 4 oder noch größer sein. Bedingung ist nur, dass n und o zusammen 2 oder größer 2 sind. Häufig ist o gleich 1.

In zwei voneinander unabhängigen spezifischen Ausführungsformen ist n gleich 2 oder größer 2, und jedes $R^2$ hat die jeweils identische Bedeutung COOH bzw. OH.

In einer weiteren, ebenfalls von anderen Ausführungsformen unabhängigen Ausführungsform enthält das Kieselsäure(hetero)polykondensat mindestens zwei unterschiedliche Gruppen $R^1$. Diese können in einer bevorzugten Variante Substituenten an ein und demselben Rest $R^3$ sein; in einer anderen bevorzugten Variante enthält das Polykondensat unterschiedliche Reste $R^3$, die jeweils unterschiedliche Gruppen $R^1$ tragen. Bei den genannten Ausführungsformen sind solche wiederum besonders hervorzuheben, in denen weiterhin mindestens eine Gruppe $R^2$ vorhanden ist. Dieser kann besonders bevorzugt ausgewählt sein unter COOH oder OH.

Die Bedingungen für die Verteilung der Gruppen $R^1$ und $R^2$ in dem oder in den Resten $R^3$ sind so gewählt, dass im erfindungsgemäßen Kieselsäure(hetero)polykondensat entweder

(i) mindestens zwei unterschiedlich reaktive organisch polymerisierbare Gruppen vorhanden sind, die einer Thiol-en-Reaktion zugänglich sind, und/oder

(ii) unterschiedliche Reste $R^3$ vorhanden sind, die jeweils eine Gruppe $R^1$ sowie eine zweite Gruppe $R^2$ aufweisen, wobei sich zumindest die Reste $R^2$ in unterschiedlichen Resten $R^3$ voneinander unterscheiden, und/oder

(iii) jeder Rest $R^3$ mindestens zwei Gruppen $R^1$ neben einer weiteren Gruppe $R^2$ aufweist, die in unterschiedlichen Resten $R^3$ unterschiedlich sein kann, und/oder

(iv) mindestens zwei unterschiedliche, einer ROMP zugängliche Gruppen $R^1$ vorhanden sind.

Die erfindungsgemäßen Kieselsäure(hetero)polykondensate besitzen aufgrund dieser Zusammensetzung die folgenden Vorteile:
Wenn zwei unterschiedlich reaktive organisch polymerisierbare ($R^2$) und/oder einer ROMP zugängliche ($R^1$) Gruppen vorhanden sind, stehen Gruppen zur Verfügung, die sich abgestuft, ggf. durch unterschiedliche Härtungsmechanismen und damit auch mit unterschiedlicher Geschwindigkeit, härten lassen.

Ein gemischtes System, also ein Kondensat mit unterschiedlichen Gruppen $R^3$, lässt sich gezielt und einfach durch das Verhältnis der Ausgangsmaterialien zueinander einstellen. Dadurch lassen sich basierend auf einem einzigen Ausgangsmaterial eine Vielzahl von einander ähnlichen Kondensaten herstellen, die sich bezüglich ihrer physikalischen Eigenschaften unterscheiden. Kondensate mit mindestens zwei Gruppen an einem Rest $R^3$, die jeweils einer Thiol-En-Addition zugänglich sind, lassen sich zu einem organischen Polymer mit sehr dichter organischer Vernetzung aushärten. Auch andere Härtungsreaktionen wie ROMP oder die Polymerisation durch Polyaddition von Resten $R^2$ mit der Bedeutung (a) (und hier insbesondere von Doppelbindungen vorhandener (Meth)Acrylgruppen), lassen sich fein abstufen. In den Fällen, in denen Gruppen $R^2$ die unter (b) bis (d) genannten Bedeutungen besitzen und n nicht gleich 0 ist, zeigen die erfindungsgemäßen Kondensate eine Verbesserung der Haftung, der Ätzwirkung, der Matrixhydrophilie der mechanischen oder der antibakteriellen Eigenschaften, und/oder es bieten sich Vorteile bei der Härtung. Schließlich können freie Hydroxygruppen oder Carboxylgruppen bei Bedarf für die Ankopplung (Addition) weiterer funktioneller Gruppen genutzt werden, z.B. durch Veresterung oder Umsetzung mit Isocyanat. Werden hierfür di-, tri- oder höherfunktionelle (z.B. tetrafunktionelle) Reaktionspartner wie Di- oder Triisocyanate oder Di- oder Tricarbonsäuren eingesetzt, lässt sich das Kondensat über einen nochmals anderen Mechanismus organisch vernetzen.

Die Gruppe $R^2$ kann in manchen Kondensaten einheitlich mit einer Gruppe pro Rest $R^3$ vorhanden sein (n ist in Formel (1) dann gleich 1); die Erfindung stellt aber auch maßgeschneiderte Kondensate bereit, in denen eine solche Gruppe nur an einem Teil der Reste $R^3$ oder in denen mehrere, unterschiedliche solcher Gruppen an unterschiedlichen Resten $R^3$ vorhanden sind. Dies vermehrt die Variabilität der Kondensate hinsichtlich der genannten Parameter noch weiter. In vielen Ausführungsformen liegen die Vorteile, die sich aufgrund des Vorhandenseins organisch polymerisierbarer Gruppen ergeben, und diejenigen, die sich aufgrund des Vorhandenseins von Gruppen $R^2$ mit einer Bedeutung gemäß (b) bis (d) ergeben, in Kombination vor.

Die in Formel (1) dargestellte Verzweigung des kohlenwasserstoffhaltigen Rückgrats, gezeigt anhand der abzweigenden Zickzacklinie, ist optional. In spezifischen Ausführungsfällen kann der Rest $R^1$ nämlich ein Substituent sein, der direkt an ein Atom des Rückgrats von $R^3$ gebunden ist. Ein Beispiel ist der Fall, in dem $R^1$ ein Norbornenylrest ist, der direkt an ein Kohlenstoffatom aus dem Rückgrat des Si-C-gebundenen Restes gebunden ist.

Das Kieselsäurepolykondensat kann entweder nur Siliciumatome im anorganischen Kieselsäuregerüst aufweisen oder aber neben Siliciumatomen auch andere Metallatome enthalten, wie aus dem Stand der Technik bekannt, beispielsweise Bor, Aluminium, Titan, Zirkonium oder Zinn, die über entsprechende Alkoxide oder dgl. in das Kondensat eingebracht werden. Bei letzterem handelt es sich um Kieselsäureheteropolykondensate. Der Ausdruck "Kieselsäure(hetero)polykondensat" soll beide Varianten umfassen.

Um zu den erfindungsgemäßen Kieselsäure(hetero)polysiloxanen zu gelangen, kann man ausgehen von z.B.

Kieselsäure(hetero)polykondensaten, die durch Hydrolyse und Kondensation aus Silanen der allgemeinen Formel (A) hergestellt wurden:

$$\{X_aR_bSi[R'(A)_c]_{(4-a-b)}\}_xB \qquad (A)$$

worin die Reste folgende Bedeutung haben:

X: Wasserstoff, Halogen, Hydroxy, Alkoxy, Acyloxy, Alkylcarbonyl, Alkoxycarbonyl oder $-NR''_2$;
R: Alkyl, Alkenyl, Aryl, Alkylaryl oder Arylalkyl;
R': Alkylen, Arylen oder Alkylenarylen;
R'': Wasserstoff, Alkyl oder Aryl;
A: O, S, PR'', POR'' oder NHC(O)O;
B: geradkettiger oder verzweigter organischer Rest, der sich von einer Verbindung mit mindestens drei C=C-Doppelbindungen und 5 bis 50 Kohlenstoffatomen ableitet;
a: 1, 2 oder 3;
b: 0, 1 oder 2;
c: 0 oder 1;
x: ganze Zahl, deren Maximalwert der Anzahl von Doppelbindungen in der Verbindung B minus 1 entspricht.

Solche Silane und Polykondensate sind in DE 40 11 044 A1 offenbart.

Kieselsäure(hetero)polykondensaten, die durch Hydrolyse und Kondensation aus Silanen der allgemeinen Formel (B) hergestellt wurden:

$$BfA\text{-}(Z)_d\text{-}R^1(R^2)\text{-}R'\text{-}SiX_aR_b\}_c \qquad (B)$$

worin die Reste und Indices folgende Bedeutung haben:

A = O, S, NH oder C(O)O;
B = ein geradkettiger oder verzweigter organischer Rest mit mindestens einer C=C-Doppelbindung und 4 bis 50 Kohlenstoffatomen;
R = Alkyl, Alkenyl, Aryl, Alkylaryl oder Arylalkyl;
R' = Alkylen, Arylen, Arylenalkylen oder Alkylenarylen mit jeweils 0 bis 10 Kohlenstoff-Atomen, wobei diese Reste durch Sauerstoff- und Schwefelatome oder durch Aminogruppen unterbrochen sein können;
$R^1$ = Stickstoff, Alkylen, Arylen oder Alkylenarylen mit jeweils 1 bis 10 Kohlenstoffatomen, wobei diese Reste durch Sauerstoff- oder Schwefelatome oder durch Aminogruppen unterbrochen sein können;
$R^2$ = OH oder COOH;
X = Wasserstoff, Halogen, Hydroxy, Alkoxy, Acyloxy, Alkylcarbonyl, Alkoxycarbonyl oder $-NR''_2$;
R" = Wasserstoff, Alkyl oder Aryl;
Z = CO oder CHR, mit R gleich H, Alkyl, Aryl oder Alkylaryl;
a = 1, 2 oder 3;
b = 0,1 oder 2.

Solche Silane und Kieselsäurepolykondensate sind in DE 44 16 857 C1 offenbart.

Kieselsäure(hetero)polykondensaten, die durch Hydrolyse und Kondensation aus Silanen der allgemeinen Formel (C) hergestellt wurden:

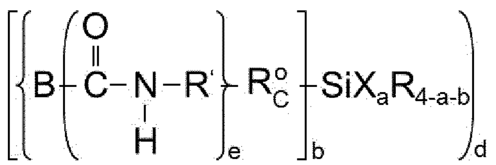
(C)

worin die Reste und Indices die folgende Bedeutung haben:

B = organischer Rest mit mindestens einer C=C-Doppelbindung;
R = Alkyl, Alkenyl, Aryl, Alkylaryl oder Arylalkyl;
R° und R' jeweils = Alkylen, Alkenylen, Arylen, Alkylenarylen oder Arylenalkylen;
X = Wasserstoff, Halogen, Hydroxy, Alkoxy, Acyloxy, Alkylcarbonyl, Alkoxycarbonyl oder $-NR''_2$ mit R" gleich Wasserstoff, Alkyl oder Aryl;
a = 1, 2 oder 3
b = 1, 2 oder 3, mit a + b = 2, 3 oder 4;
c = 0 oder 1;
d = 1, 2, 3, 4, 5, 6, 7, 8, 9 oder 10;
e = 1, 2, 3 oder 4 mit e = 1 für c = 0,
mit der Bedingung, dass entweder e oder b >1 sein muss oder B ein organischer Rest mit mehr als einer C=C-Doppelbindung ist.

Die Silane der Formel (C) sowie die daraus ableitbaren Kieselsäurepolykondensate sind in DE 199 10 895 A1 offenbart.

Kieselsäure(hetero)polykondensaten, die durch Hydrolyse und Kondensation aus Silanen der allgemeinen Formel (D) hergestellt wurden:

$$\{B'\text{-}Z'\text{-}R^1(B)\text{-}R\text{-}\}_a(R')_bSiX_{4-a-b} \qquad (D)$$

worin die Reste und Indices die folgende Bedeutung haben:

R ist eine Alkylen-, Arylen- oder Alkylenarylengruppe, die durch eine oder mehrere Sauerstoff- oder Schwefelatome

oder Carboxyl- oder Aminogruppen unterbrochen sein oder solche Atome/Gruppen an ihrem dem Siliciumatom abgewandten Ende tragen kann;
$R^1$ ist eine mit Z' substituierte Alkylen-, Arylen- oder Alkylenarylengruppe, die durch eine oder mehrere Sauerstoff- oder Schwefelatome oder Carboxyl- oder Aminogruppen unterbrochen sein oder solche Atome/Gruppen an einem ihrer Enden tragen kann;
R' ist eine Alkyl-, Alkenyl-, Aryl-, Alkylaryl- oder Arylalkylgruppe;
B und B' können gleich oder verschieden sein, beide Reste haben die Bedeutung einer geradkettigen oder verzweigten organischen Gruppe mit mindestens einer C=C-Doppelbindung und mindestens zwei Kohlenstoffatomen;
X ist eine Gruppe, die unter Ausbildung von Si-O-Si-Brücken eine hydrolytische Kondensationsreaktion eingehen kann;
Z' hat die Bedeutung -NH-C(O)O-, -NH-C(O)- oder -CO(O)-, wobei die beiden erstgenannten Reste über die NH-Gruppe am Rest B' gebunden sind, während die Carboxylatgruppe in beiden Richtungen weisen kann;
a bedeutet 1 oder 2 und
b ist 0 oder 1.

Solche Silane und Polykondensate sind in DE 103 49 766 A1 offenbart; sie lassen sich unter die Struktur (1) subsumieren, worin $R^2$ ein organisch polymerisierbarer Rest ist.

Kieselsäure(hetero)polykondensaten, die durch Hydrolyse und Kondensation aus Silanen der allgemeinen Formel (E) hergestellt wurden:

$$(X_aR_bSi)_m[-\{B\}-([O]_oP[O]_pR'_cY_d)_n]_{4ab} \qquad (E)$$

worin die Gruppen, Reste und Indices die folgende Bedeutung haben:

B ist eine mindestens zweibindige, geradkettige oder verzweigte Gruppe mit mindestens einem organisch polymerisierbaren Rest und mindestens 3 Kohlenstoffatomen,
X ist ein vom Siliciumatom abhydrolysierbarer Rest oder OH,
R und R' sind unabhängig voneinander ggf. substituiertes Alkyl, Alkenyl, Aryl, Alkylaryl oder Arylalkyl,
Y ist Cl, OH oder OR',
a ist 0, 1, 2 oder 3,
b ist 0, 1 oder 2,
a + b sind zusammen 1, 2oder 3,
c ist 0, 1 oder 2,
d ist 0, 1 oder 2,
c + d sind zusammen 2,
m ist mindestens 1, mit der Maßgabe, dass m nicht mehr als 1 ist, wenn a + b 1 oder 2 bedeutet,
n ist mindestens 1,
o ist 0 oder 1, und
p ist 0 oder 1.

Silane der Formel (E) und daraus abgeleitete Kieselsäurepolykondensate sind in DE 101 32 654 A1 offenbart. Sie fallen unter die Struktur (1), worin $R^2$ ein phosphorhaltiger Rest, beispielsweise eine Phosphonsäure ist.

Auch von Umsetzungsprodukten dieser Kieselsäurepolykondensate kann man ausgehen, und zwar insbesondere solchen, die durch eine oder mehrere Reaktion(en) mit Verbindungen entstanden sind, die an doppelbindunghaltigen Gruppen B bzw. B' der Reste in den Kondensaten (A) bis (E) angreifen. Dabei können sich Kieselsäurepolykondensate bilden, die mindestens zwei Reste $R^2$ wie voranstehend definiert aufweisen, wobei einer dieser Reste eine organisch polymerisierbare, eine C=C-Doppelbindung aufweisende Gruppe enthält oder ist, wobei sich mindestens einer dieser Reste jedoch weiter entfernt vom Siliciumatom befindet als im Ausgangs-Kieselsäurepolykondensat. Die Anzahl und die Bedeutung der Reste $R^2$ sowie deren Abstand zum Siliciumatom können in verschiedenen am Siliciumatom über Kohlenstoff gebundenen Resten dabei unterschiedlich sein. Dies ist in der noch nicht veröffentlichten Patentanmeldung DE 10 2011 050 672.1 beschrieben. Das als Ausgangsmaterial eingesetzte Kieselsäure(hetero)polykondensat kann aus den entsprechenden Silanen durch hydrolytische Kondensation erzeugt werden.

In manchen Fällen dienen nicht Kieselsäure(hetero)polykondensate als Ausgangsmaterial, sondern entsprechende Silane. In diesen Fällen erfolgt eine hydrolytische Kondensation an geeigneter Stelle in der Reaktionsabfolge.

Die Umsetzung der jeweiligen Ausgangsmaterialien zu den erfindungsgemäßen Kieselsäure(hetero)polykondensaten erfolgt jeweils dadurch, dass ein Reagens (Y), das ausgewählt ist unter Cyclopentadien, Furan, Cyclohexadien sowie Materialien, aus denen in situ eine dieser drei Verbindungen entstehen kann, an Gruppen B und/oder B' der oben genannten Kondensate (A) bis (E) oder an vergleichbaren Kondensate mit Resten B und/oder B' wie für (A) bis (E)

definiert oder an in diese Kondensate überführbaren Silanen, also an Gruppen, die polymerisierbare Doppelbindungen aufweisen, angreift. In bevorzugten Ausführungsformen wird als Reagens (Y) Cyclopentadien eingesetzt. Dieses wird in der Regel durch Spaltung von Dicyclopentadien in situ erzeugt.

Für den Fall, dass im erfindungsgemäßen Kieselsäure(hetero)polykondensat alle Reste $R^3$ identisch sein sollen, wird hierfür z.B. eines der voranstehend gezeigten Kondensate (oder ein vergleichbares anderes Kondensat) als Ausgangsmaterial eingesetzt. Soll das erfindungsgemäße Kondensat unterschiedliche Reste $R^3$ aufweisen, gibt es prinzipiell vier unterschiedliche Routen. In der ersten Route werden unterschiedliche Silane mit geeigneten Resten cokondensiert, worauf das Co-Kondensat weiter stöchiometrisch umgesetzt wird. In der zweiten Route wird ein Kieselsäure(hetero)polykondensat, bei dem es sich um eine Vorstufe des Ausgangsmaterials handelt, oder das ihm zugrundeliegende Silan einer nicht-stöchiometrischen Umsetzung mit einem Reagens (Z) unterworfen, derart, dass unterschiedliche über Kohlenstoffatome an Silicium gebundene Reste entstehen. Das Produkt dieser Umsetzung wird sodann weiter stöchiometrisch umgesetzt. In einer dritten Route wird als Ausgangsmaterial ein Kieselsäure(hetero)polykondensat mit identischen über Kohlenstoffatomen an Silicium gebundenen Resten eingesetzt; die Umsetzung zum erfindungsgemäßen Produkt erfolgt jedoch in nicht-stöchiometrischer Weise. Bei dieser Route kann die nicht-stöchiometrische Umsetzung auch auf der Stufe des Silans erfolgen, wobei das Produktgemisch ohne Auftrennung anschließend der hydrolytischen Kondensation unterworfen wird. Eine vierte Route geht von zwei Chargen eines Silans oder Kieselsäurepolykondensats aus, die getrennt umgesetzt werden. Dabei wird die erste Charge mit einem anderen Reagens (Y) umgesetzt als die zweite Charge. Die derart derivatiserten Silane werden anschließend cokondensiert. Zwei, drei oder alle vier dieser Maßnahmen der drei genannten Routen können auch in beliebiger Weise miteinander kombiniert werden. Man erhält dann hoch diversifierte Mischkondensate.

Ein Beispiel für die vierte Route ist die Verwendung von Cyclopentadien als erstes Reagens (Y) und von Furan als zweites Reagens (Y).

Für die nicht-stöchiometrischen Reaktionen ist es günstig, wenn das Reagens (Y) bzw. das Reagens (Z) im molaren Unterschuss eingesetzt wird, bezogen auf die Anzahl der vorhandenen Gruppen B bzw. B plus B', definiert als 1-$\alpha$ Mol der Verbindung (Y) bzw. (Z) in Relation pro Mol der Gruppen B bzw. B plus B'. Dabei ist $\alpha$ vorzugsweise mindestens 0,05, vorzugsweise mindestens 0,10, in anderen Fällen mindestens 0,30, manchmal auch mindestens 0,40 und in Einzelfällen >0,50, wobei $\alpha$ dann auch Werte von z.B. 0,90 annehmen kann.

Dieser technischen Lehre liegt die Erkenntnis zugrunde, dass beim Einsatz des Reagens' (Y) bzw. (Z) im Unterschuss diese Verbindung vollständig verbraucht wird, sodass in den erfindungsgemäßen Kieselsäure(hetero)polykondensaten bzw. bereits in deren Vorstufen keine ggf. aus toxikologischer oder allergologischer Sicht problematischen Monomere mehr vorhanden sind (überschüssiges Reagens (Y) kann aber natürlich auch ggf. durch einfaches Anlegen eines Unterdrucks entfernt werden). Und schließlich ergibt sich ein entscheidender Vorteil bei der Herstellung: das Produkt der Reaktion muss weder gereinigt noch auf eine sonstige Weise aufgearbeitet werden und kann daher sofort und unaufwändig verwendet oder einer nachfolgenden Reaktion unterzogen werden.

Die Erfindung soll nachstehend anhand von Reaktionsbeispielen näher erläutert werden.

Als Ausgangsmaterial wird im ersten dieser Beispiele ein Kieselsäurepolykondensat verwendet, das durch Hydrolyse und Kondensation eines Silans der allgemeinen Formel (B) (vorzugsweise im "Sol-Gel"-Verfahren) hergestellt wurde:

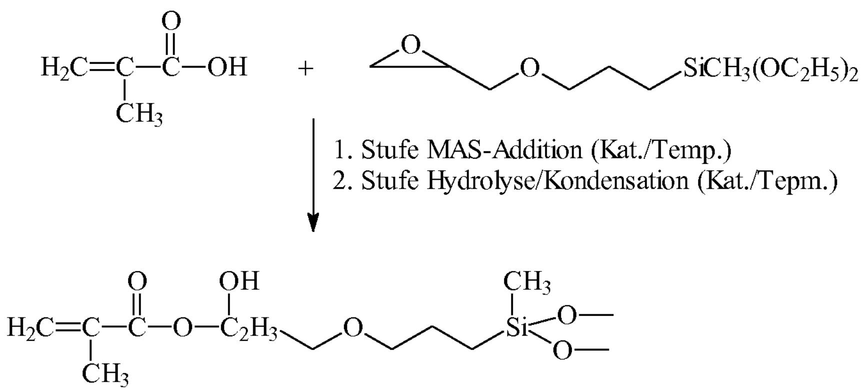


("Umsetzung 1")

Das so entstandene Kieselsäurepolykondensat wird nachstehend auch als "Basisharz I" bezeichnet. Es wird anschließend mit einer Verbindung (Y) wie oben definiert umgesetzt, vorzugsweise mit Cyclopentadien. Diese Umsetzung ist nachstehend dargestellt:

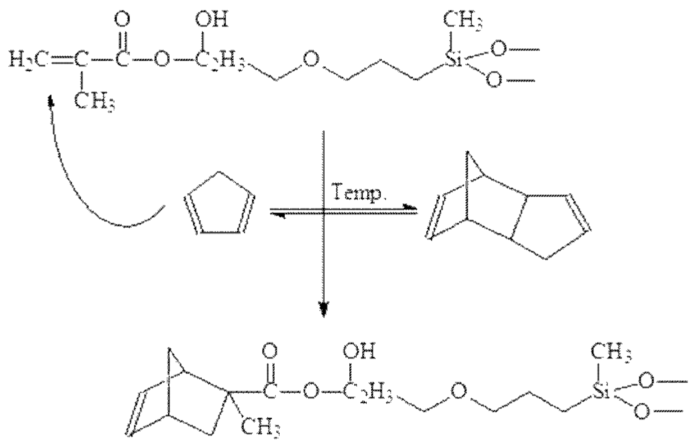


("Umsetzung 2")

Das Produkt dieser Umsetzung ist - bei vollständiger Umsetzung - ein Kieselsäure(hetero)polykondensat, in dem jedes Si-Atom denselben Rest $R^3$ aufweist. Er enthält als Gruppe $R^1$ eine Norbornenylgruppe, die über eine C(O)O-Kupplungsgruppe an den Rest $R^3$ angebunden ist. Außerdem weist er als Rest $R^2$ eine Hydroxygruppe auf.

Voraussetzung für die völlige Umsetzung ist eine ausreichende Menge an Cyclopentadien im Reaktionsgemisch. Wird diese reduziert, erhält man ein erfindungsgemäßes Kieselsäurepolykondensat, das zwei unterschiedliche Reste $R^3$ enthält:

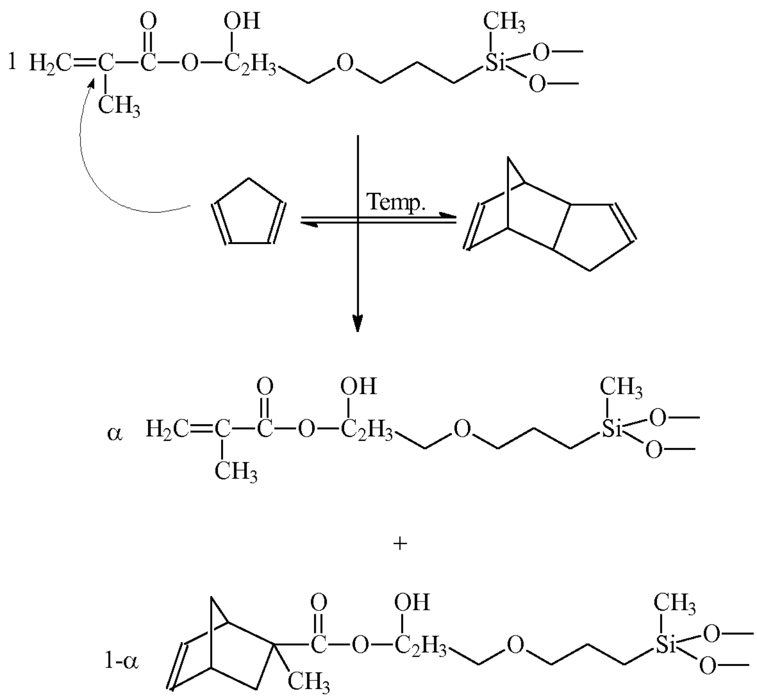

1

α

+

1-α

("Umsetzung 3")

Der erste Rest $R^3$ enthält als organisch polymerisierbare Gruppe eine Methacrylatgruppe, die einer Thiol-en-Polyaddition zugänglich ist, nicht aber einer ringöffnenden Methathese-Polymerisation (ROMP). Der zweite Rest $R^3$ enthält als organisch polymerisierbare Gruppe eine Norbornenylgruppe, die zusätzlich einer ROMP unterworfen werden kann. Beide Reste $R^3$ enthalten als Gruppe $R^2$ eine Hydroxygruppe.

Bei diesem Beispiel erfolgt die Generierung unterschiedlicher Reste $R^3$ erst im letzten Schritt. Dies ist jedoch bereits einem vorangehenden Schritt möglich:

Wird das Produkt der "Umsetzung 1" vor der Reaktion mit dem Reagens (Y) (hier Cyclopentadien) unterstöchiometrisch

mit einem Reagens (Z) angegriffen, das die oder einen Teil der Hydroxygruppen in organisch polymerisierbare, doppelbindungshaltige Gruppen umwandelt, lässt sich eine weitere Feinabstufung erhalten. Dies sei an einem Beispiel demonstriert, das von einem Kieselsäurepolykondensat ausgeht, das durch hydrolytische Kondensation eines Silans der allgemeinen Formel (D) hergestellt wurde. Hierfür wurde zuerst das Kondensat der allgemeinen Formel (B) durch Umsetzung mit Methacrylsäurechlorid als Reagens (Z) modifiziert:

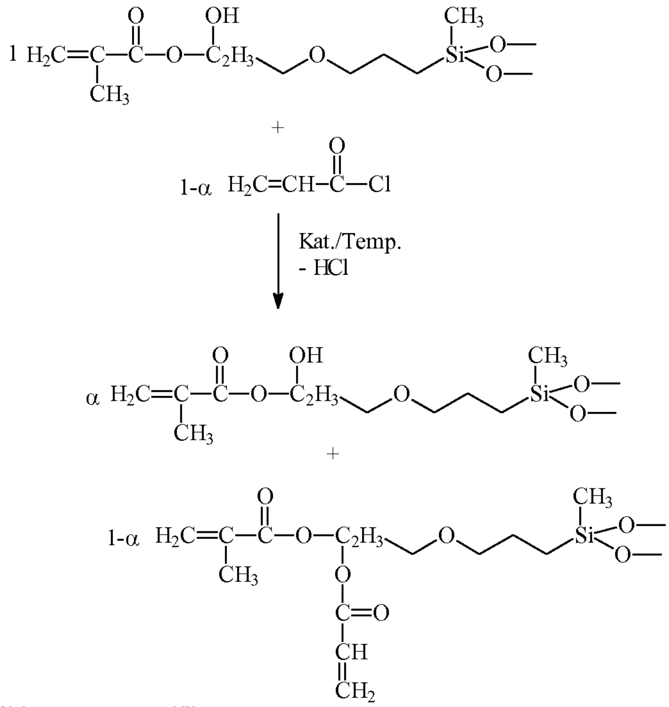


("Umsetzung 4")

Dieses Polykondensat (Produkt der "Umsetzung 4") wird nachstehend auch als "Basisharz II" bezeichnet. Es enthält sowohl Gruppen, die Kondensaten der Formel (B) entsprechen, als auch solche, die der Formel (D) zuzuordnen sind. Für die Reaktion wird bevorzugt ein Verhältnis von 0,6 bis 0,95 Mol des die Gruppe $R^2$ umwandelnden Reagens' (Z) eingesetzt, hier also bevorzugt 0,6 bis 0,95 Mol Acrylsäureverbindung pro Mol Hydroxygruppe verwendet. Alternativ kann die Umsetzung mit dem die Gruppe $R^2$ umwandelnden Reagens (Z) vollständig erfolgen, indem die Acrylsäureverbindung bis zur Moläquivalenz oder in manchen Fällen sogar darüber eingesetzt wird. Letzteres ist allerdings in Hinblick auf die gewünschte Vermeidung des Vorhandenseins von Monomer-Resten im Harz häufig nicht günstig. Das gebildete Kieselsäurepolykondensat enthält dann nur Reste $R^3$, die zwei organisch polymerisierbare Gruppen aufweisen, die keiner ROMP zugänglich sind. Diese Variante sei nachfolgend als "Umsetzung 5" bezeichnet.

Sowohl das Produkt der "Umsetzung 4" als auch das der "Umsetzung 5" kann sodann entweder mit einer ausreichenden Menge an Reagens (Y) umgesetzt werden, so dass alle doppelbindungshaltigen Gruppen in Gruppen $R^1$ gemäß der Definition der vorliegenden Erfindung umgewandelt werden. Bei Einsatz des Produktes der "Umsetzung 4" erhält man dadurch ein Kieselsäurepolykondensat, in dem ein Teil des Kondensats Reste $R^3$ mit einer (jeweils identischen) Gruppe $R^1$ (hier einer Norbornenylgruppe) sowie als Gruppe $R^2$ eine Hydroxygruppe aufweist. Ein weiterer Teil dieses Kondensats weist andere am Silicium über ein C-Atom gebundene Reste $R^3$ auf, die zwei Norbornenylgruppen (eine unsubstituierte und eine methylsubstituierte) enthalten:

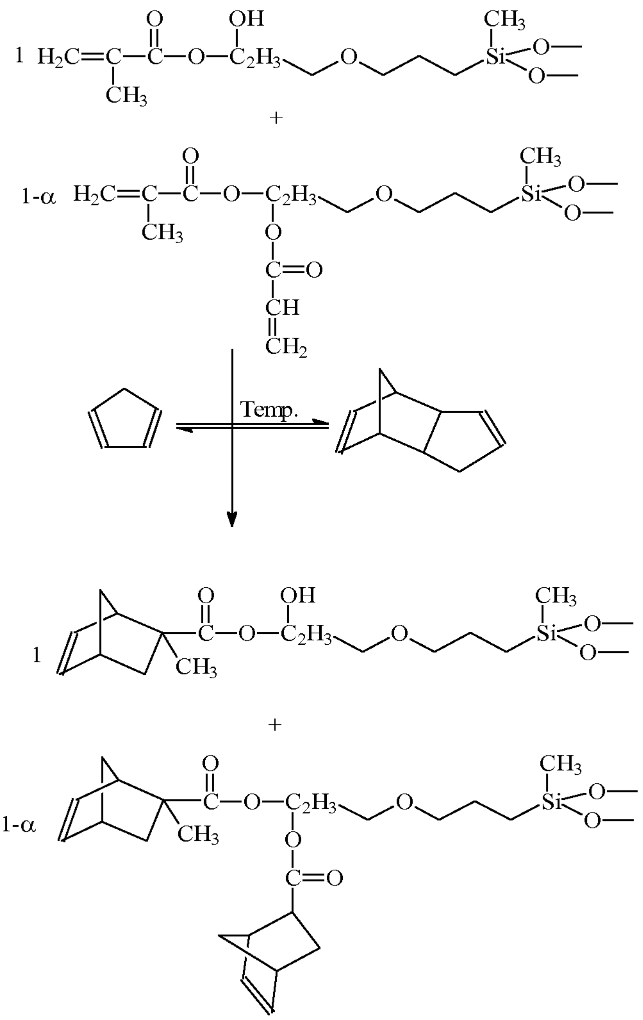


("Umsetzung 6")

Mit dem Produkt der "Umsetzung 5" erhält man bei dieser Reaktion dagegen ein einheitliches Kondensat, in dem alle Reste $R^3$ zwei Norbornenylgruppen aufweisen (n = 0 und o = 2 in Formel (1) ("Umsetzung 7").

Alternativ kann ein Unterschuss an Reagens (Y) eingesetzt werden, wodurch bei Verwendung des Produkts der "Umsetzung 4" eine weitere Differenzierung erfolgt: Das dabei entstehende Kieselsäurepolykondensat enthält fünf verschiedene über ein Kohlenstoffatom am Silicium angebundene Reste, nämlich sowohl diejenigen zwei, die in der voranstehenden Reaktion als Produkte gezeigt sind, als auch die unumgesetzten Reste sowie einen Rest $R^3$, der durch Umsetzung des sowohl eine Methacrylatgruppe als auch eine Acrylatgruppe enthaltenden Restes mit nur einem Moläquivalent Cyclopentadien entstanden ist. Da die Acrylatgruppe wesentlich reaktiver als die Methacrylatgruppe ist, entsteht dabei selektiv ein Rest $R^3$ mit einer Methacrylatgruppe als Gruppe $R^2$. Diese Umsetzung sei hier als "Umsetzung 8" bezeichnet. Wird das Produkt der "Umsetzung 5" mit einem Unterschuss an Reagens (Y) umgesetzt, enthält man dagegen zwei unterschiedliche Reste $R^3$. Im ersten Rest $R^3$ hat nur die Acrylatgruppe mit (Y) reagiert; der Rest enthält eine Gruppe $R^1$ und eine Gruppe $R^2$. Im anderen Rest $R^3$ haben sowohl die Methacrylatgruppe als auch die Acrylatgruppe mit Cyclopentadien reagiert; das Produkt enthält zwei Gruppen $R^1$ ("Umsetzung 9"). (Voraussetzung ist hierzu ein molarer Anteil $\alpha$ an (Y), der größer als der molare Anteil an Acrylatgruppe ist, da diese, wie nachstehend erwähnt, zuerst abreagieren, sofern nicht entsprechend hohe Temperaturen gewählt werden).

Bei gleichzeitiger Anwesenheit von Acryl- und Methacryl-Resten lässt sich die Selektivität der Reaktion mit dem Reagens (Y) nicht nur über dessen Menge steuern, steuern, sondern auch durch die Temperatur, bei der die Umsetzung erfolgt. So werden bei 50°C im Wesentlichen nur die (reaktiveren) Acrylgruppen von Cyclopentadien angegriffen, bei 90°C aber auch die (trägeren) Methacryl-Gruppen.

Der Reaktivitätsunterschied zwischen Acrylsäure- und Methacrylsäurederivaten gegenüber dem Reagens (A) kann auch in anderen, beliebigen Ausgestaltungen der Erfindung genutzt werden, um aus Si-C-gebundenen Resten mit einer Methacryl- und einer Acrylgruppe selektiv und gezielt Reste $R^3$ mit einer aus dem Acrylsäurerest durch Umsetzung mit (Y) hergestellten Gruppe $R^1$ sowie einem Methacrylrest als Gruppe $R^2$ zu erzeugen.

Selbstverständlich sind die voranstehenden Reaktionen nur Beispiele für die erfindungsgemäß möglichen Prinzipien; eine Vielzahl von Abwandlungen ist möglich. So kann anstelle des Silans der Formel (B) für die Herstellung des Ausgangsmaterials ein solches eingesetzt werden, in dem die Methacrylatgruppe durch eine Acrylatgruppe ersetzt ist ("Basisharz III"). Das Produkt dieser Reaktion ("Umsetzung 10") kann analog zur obigen "Umsetzung 4" mit z.B. Acrylsäureverbindung oder aber mit Methacrylsäureverbindung umsetzt werden. Im ersten Fall entsteht ein Kondensat mit Resten $R^3$, die zwei identische, einer Thiol-en-Reaktion zugängliche organisch polymerisierbare Gruppen aufweisen, die keiner ROMP zugänglich sind, im zweiten Fall sind es zwei unterschiedliche solche Gruppen. Diese sind wiederum unterschiedlich reaktiv. Der erste Fall sei nachstehend dargestellt; er führt zu einem Produkt, das nachstehend als "Basisharz IV" bezeichet wird.

Die Herstellung des Basisharzes (III) erfolgt analog zur obigen Darstellung der Umsetzung 1, so dass sie hier nicht mehr detailliert gezeigt werden muss. Daran schließt sich die Umsetzung mit Acrylsäureverbindung an; es entsteht das Basisharz IV:

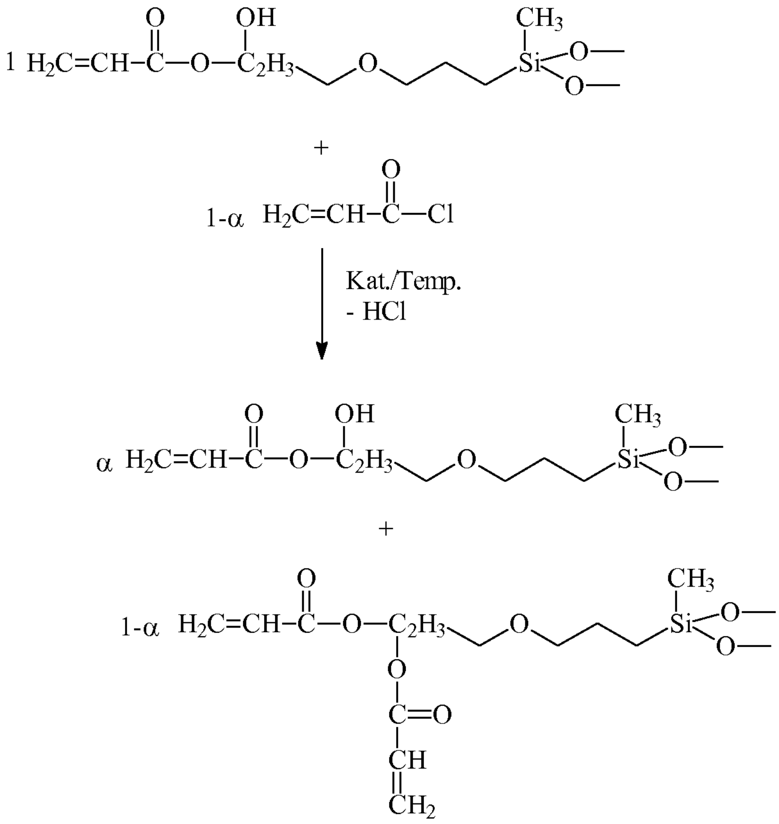


("Umsetzung 11")

Auf diese Weise kann wiederum eine differenzierte Produktpalette geschaffen werden, weil bei Verwendung von Cyclopentadien im Unterschuss neben den beiden unumgesetzten Resten, die im Zusammenhang mit der "Reaktion 6" beschrieben wurden, drei Reste $R^3$ entstehen, die entweder zwei unterschiedliche Gruppen $R^1$ (methylsubstituiertes und unsubstituiertes Norbornenyl) oder zwei identische Gruppen $R^1$ oder eine Gruppe $R^1$ in Kombination mit einer Methacrylatgruppe als Gruppe $R^2$ tragen, sowie zwei Reste $R^3$ entstehen, die jeweils eine andere Gruppe $R^1$ (methylsubstituiertes oder unsubstituiertes Norbornenyl) in Kombination mit einer Hydroxygruppe als Gruppe $R^2$ tragen:

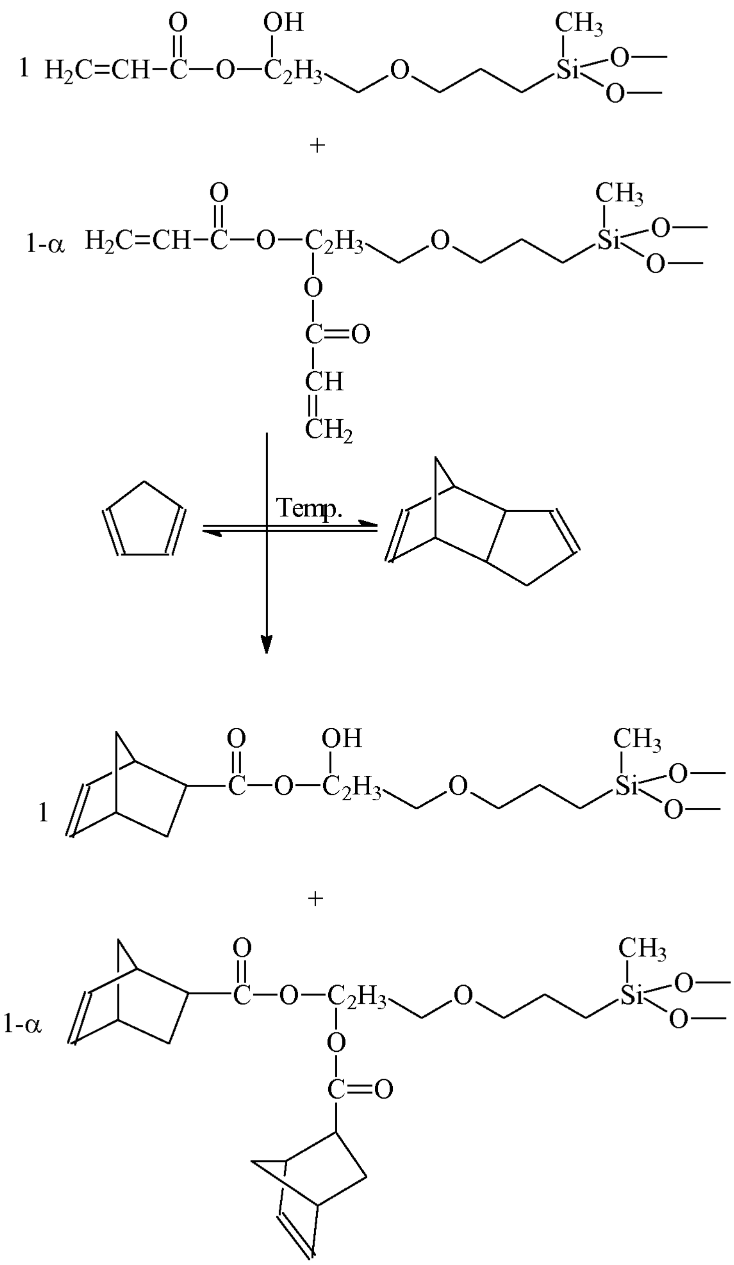

("Umsetzung 12").

Selbstverständlich sind viele andere Ausgangsmaterialien ebenfalls für die Erfindung geeignet. Ein weiteres Beispiel für die Variante, in der durch eine nicht-stöchiometrische Vorreaktion vier verschiedene Reste $R^3$ entstehen können, ist die folgende Reaktion, die sich die nicht-stöchiometrische Umsetzung einer freien Hydroxygruppe zunutze macht:

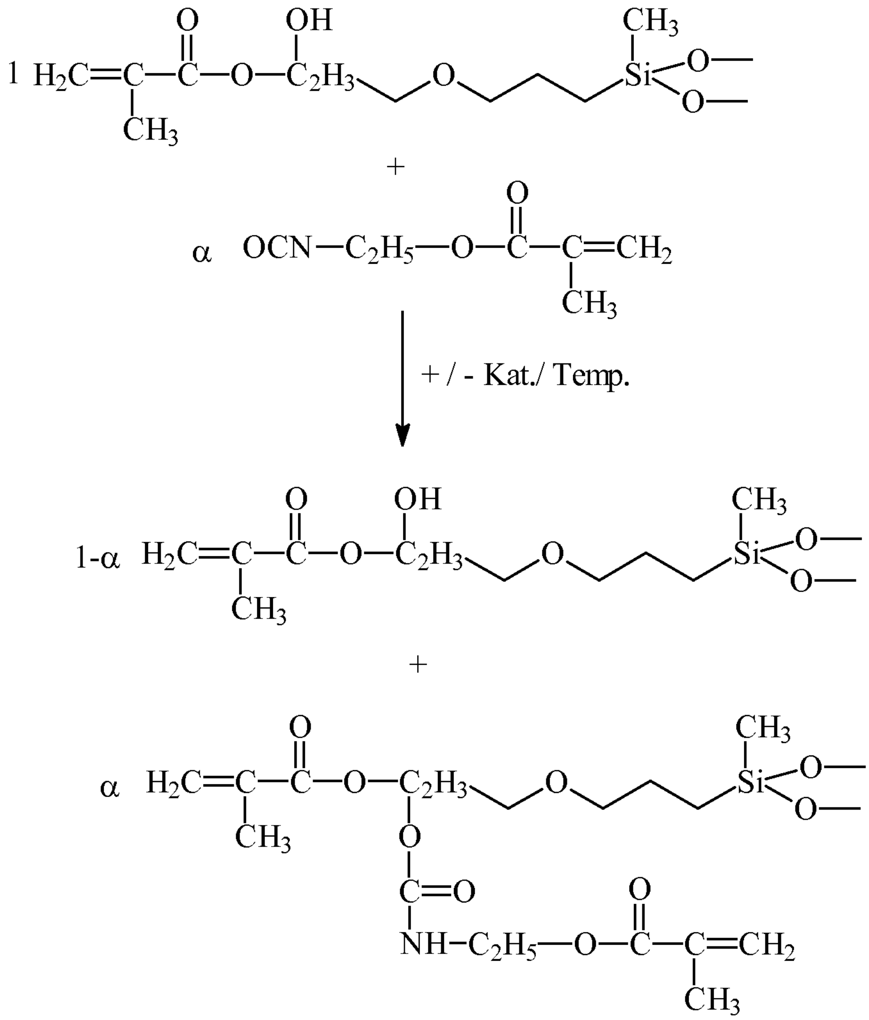


("Umsetzung 13")

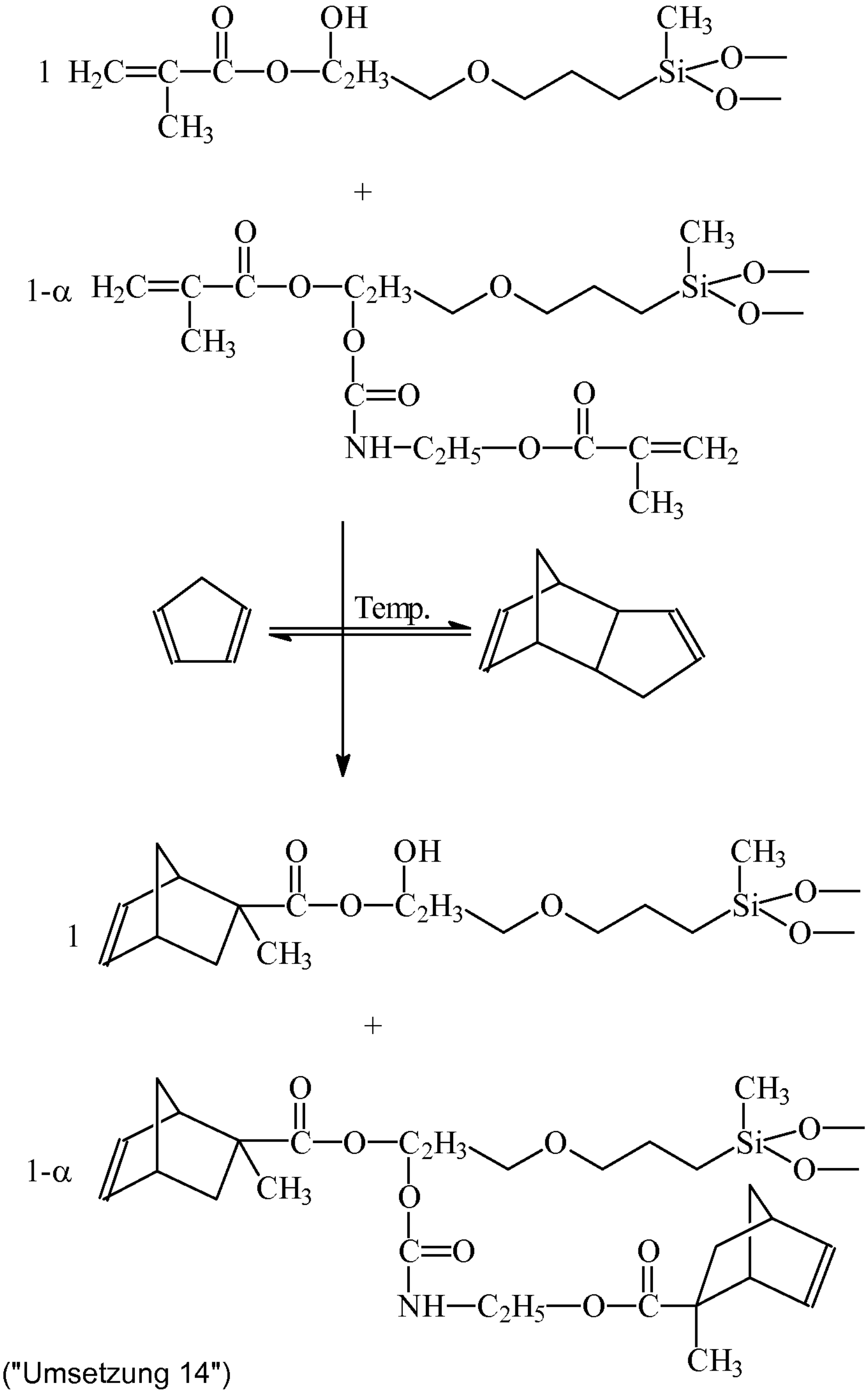


("Umsetzung 14")

Auch Produkte der nachstehend gezeigten Reaktionen können für eine Umsetzung mit Cyclopentadien genutzt werden, um erfindungsgemäße Kieselsäurepolykondensate zu erhalten. Für die Menge 1- $\alpha$ an eingesetztem Reagens (Z) gilt dabei das voranstehend Gesagte. Die gezeigten Reaktionen sind in der noch nicht veröffentlichten Patentanmeldung DE 10 2011 050 672.1 näher beschrieben:
Als Ausgangsmaterial kann ein Silan oder Kieselsäurepolykondensat dienen, das Si-C-gebundene Reste enthält, die jeweils eine C=C-doppelbindungshaltige Gruppe $R^2$ und eine weitere Gruppe $R^2$, z.B. eine Hydroxygruppe, tragen. Mit einer Hydroxythiolverbindung, hier einer Dihydroxythiolverbindung, wird die Doppelbindung angegriffen; es entsteht ein kettenverlängerter Rest mit drei Hydroxygruppen, und zwar anteilig im Gemisch mit der Ausgangsverbindung, sofern das Thiol im Unterschuss (1-$\alpha$) eingesetzt wird:

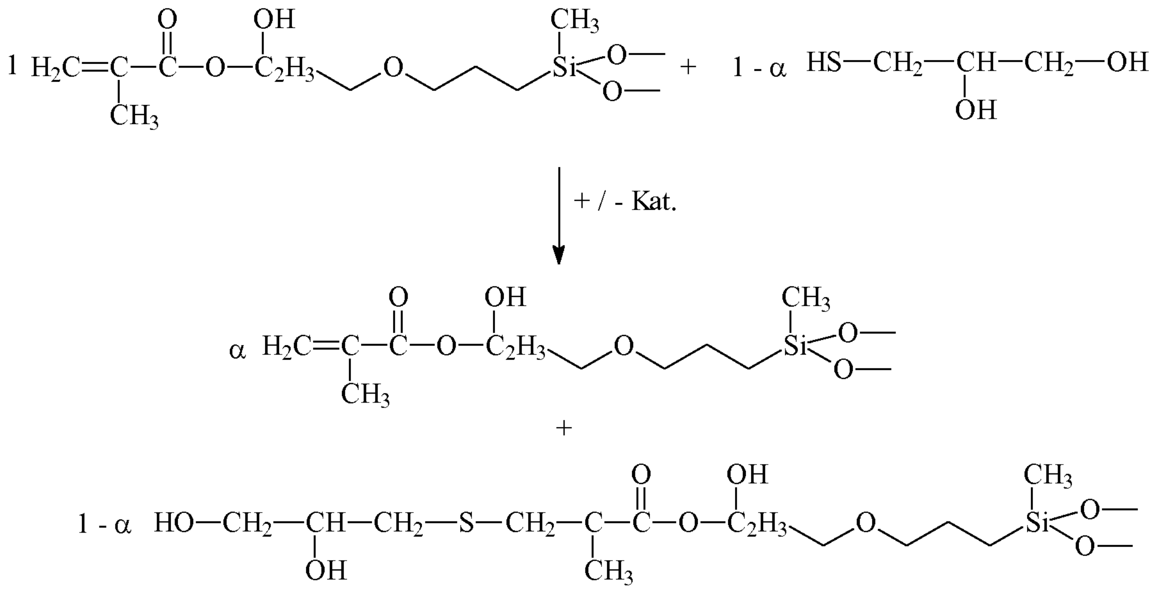


Durch Umsetzung mit einem C=C-doppelbindungshaltigen Isocyanat wird die C=C-Doppelbindung wieder eingeführt, allerdings großenteils relativ zum Siliciumatom weiter nach außen verschoben, während die zusätzliche Hydroxygruppe erhalten bleibt:

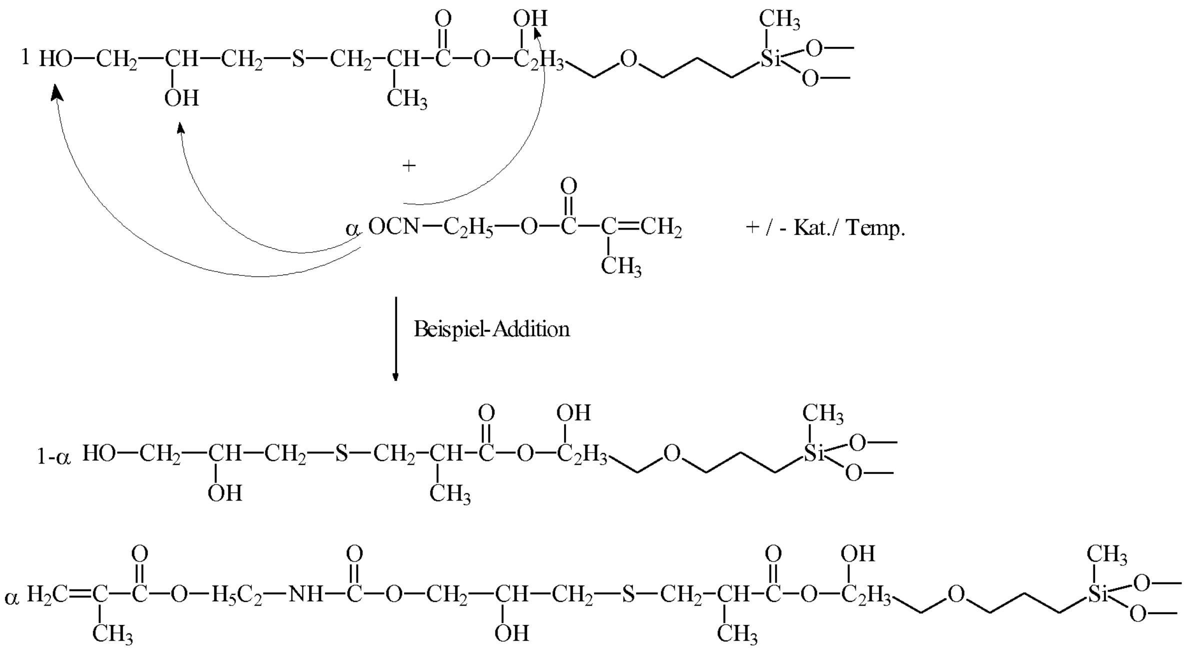


("Umsetzung 15")

Ein ähnliches Produkt erhält man, wenn die Hydroxygruppe mit einem anderen Reaktionspartner als einem Isocyanat umgesetzt wird, beispielsweise einem Anhydrid:

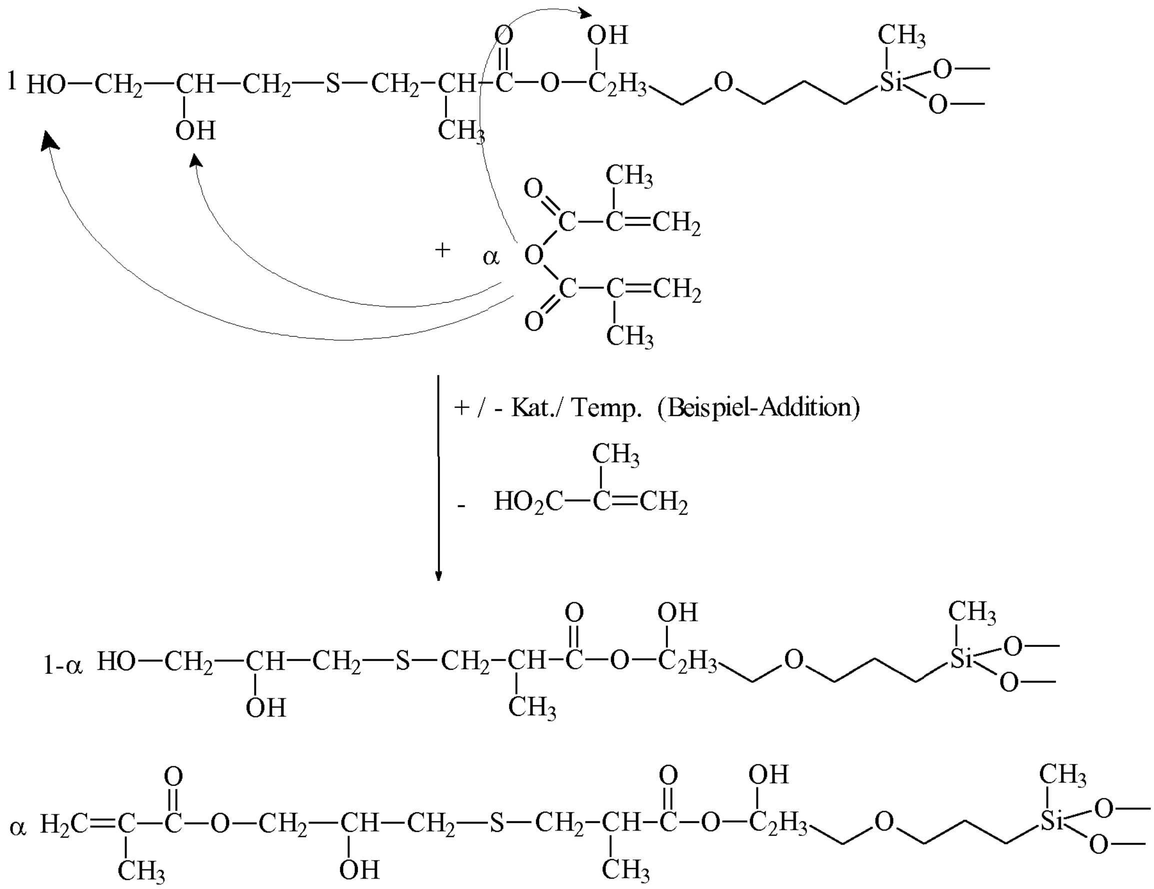


("Umsetzung 16")

Anstelle eines Thiols kann für eine derartige Umsetzung natürlich auch ein anderes Reagens eingesetzt werden, das C=C-Doppelbindungen angreifen kann, beispielsweise ein Amin:

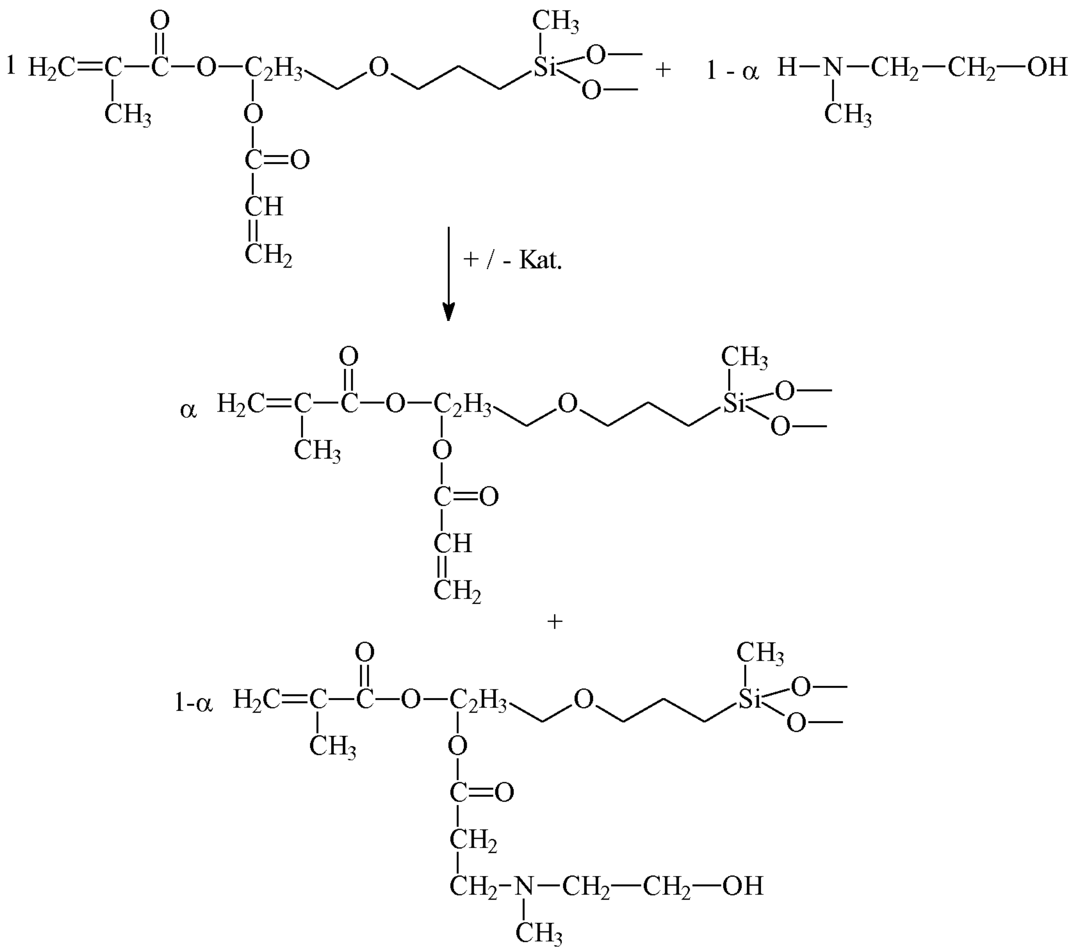


("Umsetzung 17")

Bei all diesen Umsetzungen kann durch die Wahl des molaren Verhältnisses von Reagens (A) das Mengenverhältnis zwischen unumgesetztem und umgesetztem Rest $R^3$ frei gewählt werden. Gleiches gilt für die vorangehende Umsetzung mit dem Reagens Z. Dadurch erhält man ein Kieselsäurepolykondensat, das mindestens vier verschiedene, über Kohlenstoff am Silicium gebundene Reste $R^3$ aufweist. Es wird unmittelbar offensichtlich, dass mit dieser Wahl des Synthesewegs eine Palette von Kieselsäurepolykondensaten erhältlich ist, die je nach Vorhandensein und Anteil der verschiedenen Reste $R^3$ unterschiedliche Eigenschaften aufweist, obwohl sie alle durch Umsetzung mit denselben Reagentien erhalten wurden.

Beispiele für erfindungsgemäße Kieselsäure(hetero)polykondensate, in denen $R^2$ eine Sulfonsäuregruppe bzw. ein Salz davon bedeutet, sind beispielsweise solche, die sich durch Umsetzung des Reaktionsprodukts der nachstehenden "Umsetzung 18" mit dem Reagens (Y) (z.B. Cyclopentadien) herstellen lassen:

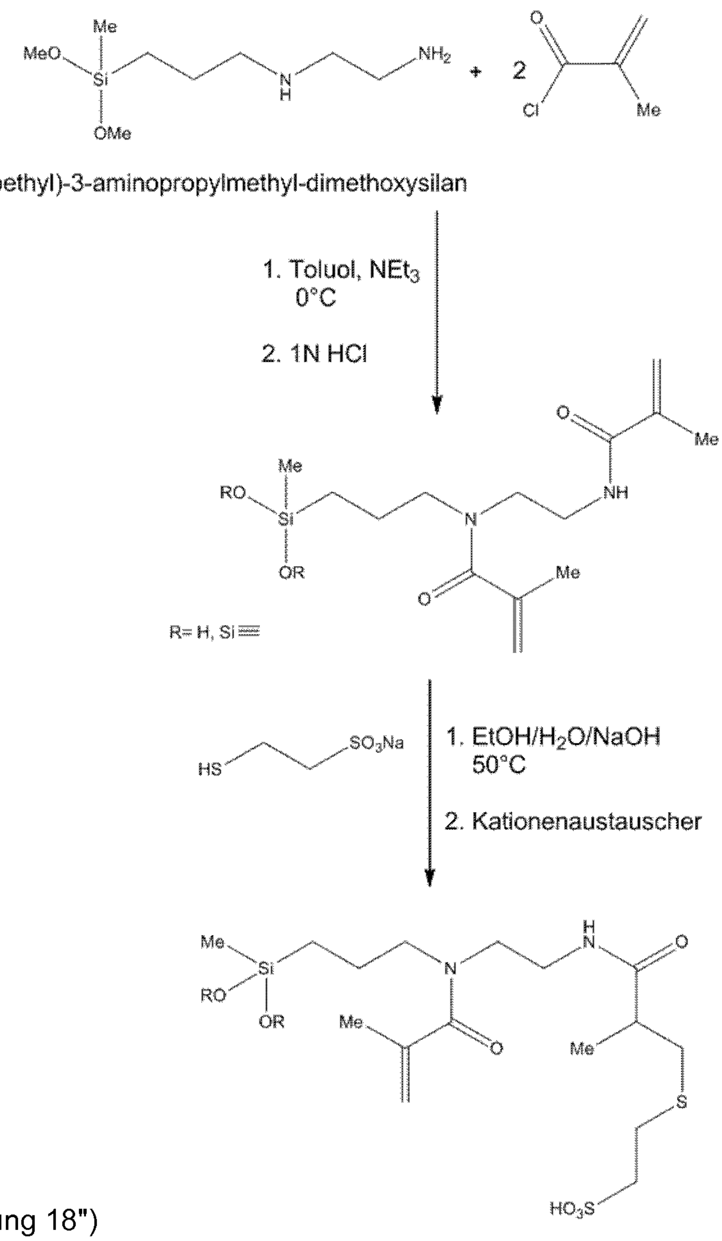


N-(2-Aminoethyl)-3-aminopropylmethyl-dimethoxysilan

("Umsetzung 18")

Die "Umsetzung 18" ist in der noch nicht offengelegten Patentanmeldung DE 10 2011 050 672.1 beschrieben. Die im Formelschema mit Me und OR bezeichneten Substituenten des Siliciums können je nach Bedarf beliebig ausgewählt sein, d.h., es kann eine für das gewünschte Kieselsäure(hetero)polykondensat geeignete Anzahl von hydrolytisch kondensierbaren Resten bzw. von als Netzwerkwandler fungierenden Resten (Alkyl-, Arylgruppen und dgl.) vorhanden sein. In speziellen Ausführungsformen können zwei die erfindungsgemäßen reaktiven Funktionen tragende Kohlenwasserstoffreste vorhanden sein; die Summe an hydrolytisch kondensierbaren Resten und als Netzwerkwandler fungierenden Resten beträgt dann 2. Die Umsetzung mit dem Reagens (Y) führt zu einem Produkt, in dem die Methacrylsäureamid-Gruppe in eine einer ROMP zugängliche Gruppe umgewandelt wird (bei Umsetzung mit Cyclopentadien in eine Methylnorbornen-Gruppe). Das Produkt fällt unter die Formel (1) mit n gleich 1 und o gleich 1.

Ein Kieselsäure(hetero)polykondensat mit n gleich 1 und o gleich 2, wobei die beiden Reste $R^2$ unterschiedlich sind und COOH und $SO_3H$ bedeuten, lässt sich durch Reaktion des Umsetzungsprodukts der nachstehend gezeigten "Umsetzung 19" mit einem Reagens (Y) wie voranstehend beschrieben herstellen:

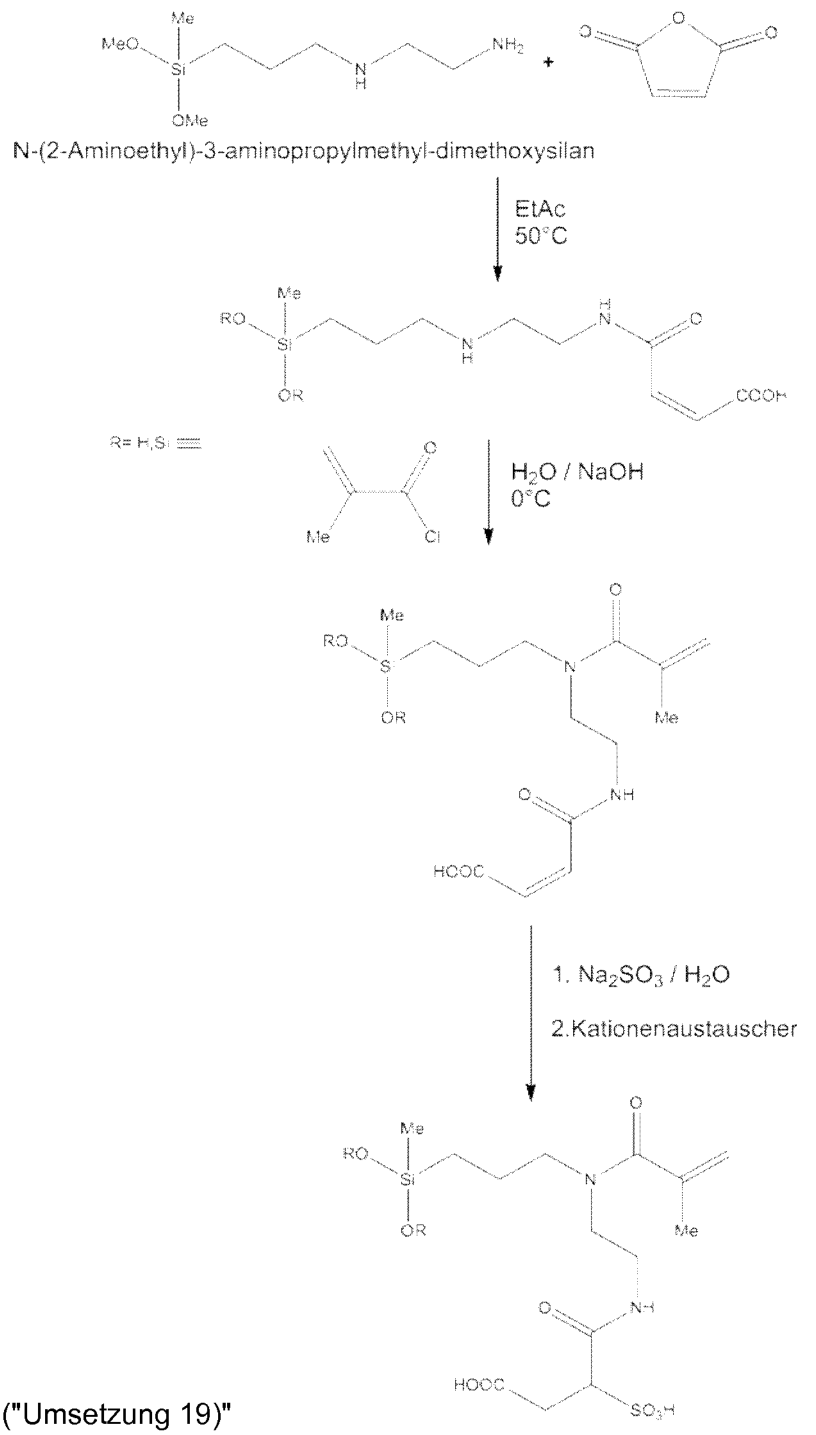


N-(2-Aminoethyl)-3-aminopropylmethyl-dimethoxysilan

("Umsetzung 19)"

Die Reaktion des Produkts der "Umsetzung 19" mit dem Reagens (Y) erfolgt wir für die vorherigen Reaktion beschrieben an der Methacrylamid-Gruppe.

Die erfindungsgemäßen Kieselsäure(hetero)polykondensate lassen sich durch die Umsetzung mit Di- oder Polythiolen im Rahmen einer Thiol-en-Reaktion mit den doppelbindungshaltigen Gruppen härten. Darüber hinaus können die Doppelbindungen in den Gruppen $R^2$, soweit vorhanden, einer Kohlenstoffketten bildenden Polymerisationsreaktion (Polyaddition; engl.: chain growth polyaddition) unterworfen werden, während die Gruppen $R^1$ einer ROMP unterworfen werden können. Auch diese beiden Reaktionen bewirken eine Härtung des Materials. Und schließlich lassen sich die doppelbindungshaltigen Gruppen dafür nutzen, zusätzlich reaktive Gruppen wie OH-Gruppen, COOH-Gruppen oder andere Säurefunktionen oder auch zusätzliche Silylgruppen in die Kondensate einzuführen. Hierfür eignen sich beispielsweise die folgenden Mercaptoalkohole, Mercaptothiole, Mercaptocarbonsäuren, Mercaptoboronsäuren, Mercaptosulfonsäuren oder Mercaptosilane (letzteres zur Einführung zusätzlich anorganisch kondensierbarer Gruppen). Beispiele für Mercaptodiole sind: 3-Mercaptopropan-1,2-diol, 6-Mercapto-1-hexanol, 4-(Mercaptohexyloxy)-benzylalkohol, 2- bzw. 3- bzw. 4-Mercaptophenol (Feststoff), 11-Mercapto-1-undecanol, oder1-Mercaptoundec-11-yl)-tetraethylenglykol. Unabhängig davon lassen sich Gruppen $R^2$ mit der Bedeutung OH oder COOH im Polykondensat weiter umsetzen, und zwar mit einem Isocyanat oder einer epoxygruppenhaltigen Verbindung oder, nur im Falle von $R^2$ gleich OH, mit einer (aktivierten) Carbonsäure. Dadurch können über eine Kopplungsgruppe B, die je nachdem ob die Verbindung an einer Hydroxy- oder einer Carboxylgruppe angreift, eine Ester-, Ether-, Säureamid- oder Urethangruppe ist, je nach Bedarf entweder weitere reaktive Gruppen in das Kondensat eingeführt werden, beispielsweise zusätzliche C=C-Doppelbindungen, phosphorhaltige Gruppen wie Phosphonsäuren/Phosphonsäureester, Aminogruppen oder Sulfonsäuregruppen, die als Substituent des Isocyanats, der epoxygruppenhaltigen Verbindung oder der Carbonsäure eingeführt werden, oder aber zuvor vorhandene Hydroxy- oder Carbonsäuregruppen eliminieren, z.B. um die Hydrophilie oder die Reaktivität des Kondensats zu senken. Erfolgt die Umsetzung im Unterschuss, lassen sich weitere Feinabstufungen realisieren.

Vor einer Härtung können die erfindungsgemäßen Kieselsäure(hetero)polykondensate oder Vorstufen davon mit beliebigen Füllstoffen (Partikeln, Fasern) versetzt werden, wodurch man Komposite erhält. Als Füllstoffe eignen sich z.B. diejenigen, die in DE 19643781, DE 19832965, DE 10018405, DE 10041038, DE 102005018351 sowie DE 102005061965 beschrieben sind. Bei Bedarf lassen sich sehr hohe Füllstoffgehalte erzielen. Die Komposite sind in der Regel plastisch verarbeitbar. In gehärteter Form, insbesondere bei hohen Füllstoffgehalten, zeigen die Komposite eine hohe Festigkeit, eine sehr geringe Schrumpfung, eine ausgezeichnete Ästhetik sowie eine hohe Biokompatibilität. Ihr E-Modul lässt sich auf die gewünschten Werte einstellen, und sie sind bei entsprechender Reaktionsführung monomerfrei. Auf allen Ebenen, beginnend mit den als Ausgangsmaterialien verwendeten Silanen über die ungehärteten, ungefüllten Harze, die Matrixsysteme bis zu den gefüllten Systemen (Kompositen) in ungehärteter und gehärteter Form lassen sich durch die abgestuften Reaktionen, wie sie die vorliegende Erfindung lehrt, in weiten Bereichen unterschiedliche Eigenschaften sehr fein einstellen und den jeweiligen Erfordernissen anpassen.

Der Einsatz der erfindungsgemäßen Materialien erstreckt sich u.a. auf die Verwendung in Form von Bulkmaterialien, Kompositen, Zementen, Klebstoffen, Vergussmassen, lösungsmittelstabilen flexiblen Dichtungsmaterialien, Beschichtungsmaterialien, Haftvermittlern, Bindemitteln für keramische Partikel (keramische Formgebungsverfahren), zur Herstellung bzw. Primung von Füllstoffen und Fasern, sowie für den Einsatz in Reaktionsextrudern.

Die technischen Felder, auf denen die Materialien gebraucht werden können, sind nicht beschränkt und reichen beispielsweise von der (Mikro)Optik und der (Mikro)Elektronik bis zur Medizin.

Besonders bevorzugt ist der Einsatz im Dentalbereich, z.B. als Restaurations- oder Prophylaxematerial, in der Prothetik oder als Implantatmaterial. Dabei lässt sich mit einer einzigen Materialgrundlage durch minimale Modifikationen der Substituenten und/oder der Härtungsreaktionen wie oben dargelegt der E-Modul für unterschiedliche Anwendungen einstellen, was insbesondere für Anwendungen in der Oralmedizin (Unterfütterungsmaterial, Prothesenbasismaterial, künstliche Zähne, Kronen/Brücken, Füllungsmaterial und dergleichen) günstig sein kann. Auch im Medizinsektor sind die Materialien in günstiger Weise einsetzbar, beispielsweise als Knochenersatzmaterial, Knochenzement, Otoplastiken oder sonstige medizinische Formteile.

Aufgrund der organisch polymerisierbaren Gruppen, die einer Photopolymerisation zugänglich sind, können die Kieselsäure(hetero)polykondensate einer Mehrphotonenpolymerisation unterworfen werden. Mit dieser Technik lassen sich aus einem Badmaterial hochpräzise 2D- oder 3D-Formteile fertigen.

Nachfolgend soll die Erfindung anhand von konkreten Beispielen näher erläutert werden:

Beispiel 1

Synthese von Basisharz I ("Umsetzung 1"; Harz mit identischen C-Si-gebundenen Resten mit einer Methacrylat- und einer Hydroxygruppe)

Zur Vorlage von 125,0 g (0,503 mol) 3-Glycidyloxypropyltrimethoxysilan werden unter trockener Atmosphäre 1,31g (0,005mol) Triphenylphosphin als Kat., 0,2 Gew.-% BHT als Stabilisator und anschließend 47,35 g (0,550 mol) Methacrylsäure zugetropft und bei 80°C gerührt (ca. 24 h). Die Umsetzung kann über die Abnahme der Carbonsäurekonzentration mittels Säuretitration sowie dem Epoxidumsatz mittels Ramanspektroskopie/Epoxidtitration verfolgt werden. Die für die Epoxidgruppe vom Epoxysilan charakteristische Bande erscheint im Ramanspektrum bei 1256 $cm^{-1}$. Der Epoxid- bzw. Carbonsäureumsatz liegt bei ≥ 99 % bzw. ≥ 89 % (→ da 1 : 1,1 Carbonsäureüberschuß). Nach Zugabe von Essigester (1000 ml/mol Silan) und $H_2O$ zur Hydrolyse mit HCi als Kat. wird bei 30°C gerührt. Der Verlauf der Hydrolyse wird jeweils durch Wassertitration verfolgt. Die Aufarbeitung erfolgt nach ca. mehrtägigem Rühren durch mehrmaliges Ausschütteln mit wässriger NaOH und mit Wasser und Filtration über hydrophobierten Filter. Es wird zunächst abrotiert und anschließend mit Ölpumpenvakuum abgezogen. Es resultiert ein flüssiges Harz ohne Einsatz von Reaktivverdünneren (Monomeren) mit einer sehr geringen Viskosität von ca. 3 - 6 Pa·s bei 25°C (stark abhängig von den genauen Hydrolyse- und Aufarbeitungsbedingungen) und 0,00 mmol $CO_2H$/g (keine freien Carboxylgruppen).

Beispiel 2

("Umsetzung 2" mit einem molaren Überschuss von (Y) = Cyclopentadien ("CP") (Molverhältnis Harz:CP = 1:2; Herstellung eines System mit einheitlichen Resten)

Zur Vorlage von 80,0 g (0,30 mol) von Basisharz I werden unter Rühren bei ca. 90°C ca. 45,5 g (0,69 mol) Cyclopentadien (CP) (durch Spaltung von Dicyclopentadien frisch hergestellt) zudestilliert und danach noch ca. 1 - 2 h bei 90 °C weitergerührt. Die Umsetzung kann mittels NMR sowie über die Abnahme der v(C=C, Methacryl)-Bande (1639 $cm^{-1}$) sowie die Bildung und Zunahme der v(C=C, Norbornenyl)-Bande (1574 $cm^{-1}$) mittels Raman-Spektroskopie verfolgt werden. Die flüchtigen Bestandteile wie z. B. unumgesetztes Cyclopentadien werden im Ölpumpenvakuum bei Temperaturen bis zu 90°C abgezogen. Es resultiert ein flüssiges Harz mit einer Viskosität von ca. 53 - 110 Pa·s bei 25°C (stark abhängig von den genauen Synthese- und Aufarbeitungsbedingungen auch der Vorstufen). Eine weitere Aufarbeitung ist in der Regel nicht erforderlich.

Beispiel 3

("Umsetzung 3" mit einer Menge an CP, die für die vollständige Umsetzung der Doppelbindungen nicht ausreicht; Herstellung eines Norbornen-Methacryl-Mischsystems)

Zur Vorlage von 26,6 g (0,10 mol) von Basisharz I werden unter Rühren bei ca. 90°C ca. 9,94 g (0,15 mol) Cyclopentadien (CP) (durch Spaltung von Dicyclopentadien frisch hergestellt) zudestilliert und danach noch ca. 1,25 h bei 90°C weitergerührt. Die flüchtigen Bestandteile wie z. B. unumgesetztes Cyclopentadien werden im Ölpumpenvakuum bei Temperaturen bis zu 90°C abgezogen. Es resultiert ein flüssiges Harz ($X \approx 0,33$) mit einer Viskosität von ca. 29 Pa·s bei 25°C (stark abhängig von den genauen Synthese- und Aufarbeitungsbedingungen auch der Vorstufen). Eine weitere Aufarbeitung ist in der Regel nicht erforderlich.

Beispiel 4

("Umsetzung 4"; Synthese von Basisharz II unter Verwendung eines großen Unterschusses an Acrylsäurechlorid)

Zur Vorlage von 120,1 g (0,45 mol) Basisharz I und 35,1 g Triethylamin (0,347 mol) in 450 ml THF als Lösungsmittel werden unter trockener Atmosphäre und Kühlung mittels Eisbad unter Rühren 28,51 g (0,315 mol) Acrylsäurechlorid zugetropft und bei RT weitergerührt. Die Umsetzung kann mittels NMR sowie über die Abnahme der Säurechlorid-Bande mittels IR-Spektrum verfolgt werden. Nach üblicher Aufarbeitung zur Abtrennung des bei der Addition entstehenden Aminhydrochlorids und säurehaltiger Nebenprodukte sowie Abziehen der flüchtigen Bestandteile mit Ölpumpenvakuum resultiert ein flüssiges Harz mit einer Viskosität von ca. 1,5 Pa·s bei 25°C (stark abhängig von den genauen Synthese- und Aufarbeitungsbedingungen insbesondere auch der Vorstufen).

Beispiel 5

(Synthese von Basisharz II unter Verwendung eines knappen Unterschusses an Acrylsäurechlorid)

Zur Vorlage von 120,7 g (0,45 mol) Basisharz I und 45,1 g Triethylamin (0,446 mol) in 450 ml THF als Lösungsmittel werden unter trockener Atmosphäre und Kühlung mittels Eisbad unter Rühren 36,66 g (0,405 mol) Acrylsäurechlorid zugetropft und bei RT weitergerührt. Nach üblicher Aufarbeitung zur Abtrennung des bei der Addition entstehenden Aminhydrochlorids und säurehaltiger Nebenprodukte sowie Abziehen der flüchtigen Bestandteile mit Ölpumpenvakuum resultiert ein flüssiges Harz mit einer Viskosität von ca. 2,7 Pa·s bei 25°C.

Beispiel 6

("Umsetzung 5"; Synthese von Basisharz II unter Verwendung eines geringen Überschusses an Acrylsäurechlorid)

Zur Vorlage von 133,3 g (0,50 mol) Basisharz I und 63,8 g Triethylamin (0,63 mol) in 500 ml THF als Lösungsmittel werden unter trockener Atmosphäre und Kühlung mittels Eisbad unter Rühren 52,04 g (0,575 mol) Acrylsäurechlorid zugetropft und bei RT weitergerührt. Nach üblicher Aufarbeitung zur Abtrennung des bei der Addition entstehenden Aminhydrochlorids und säurehaltiger Nebenprodukte sowie Abziehen der flüchtigen Bestandteile mit Ölpumpenvakuum resultiert ein flüssiges Harz mit einer Viskosität von ca. 3,3 Pa·s bei 25°C.

Beispiel 7

("Umsetzung 6", ausgehend von Basisharz II gemäß Beispiel 4)

Zur Vorlage von 99,8 g (0,33 mol) Basisharz II nach Beispiel 4 werden unter Rühren bei ca. 50°C ca. 20,3 g (0,31 mol) Cyclopentadien (CP) (zuvor durch Spaltung von Dicyclopentadien frisch hergestellt) zugetropft. Nach Erhitzen der Reaktionsmischung auf ca. 90°C werden unter Rühren 43,0 g (0,65 mol) CP (durch Spaltung von Dicyclopentadien frisch hergestellt) zudestilliert und danach noch ca. 1,5 h bei 90°C weitergerührt. Die Umsetzung kann mittels NMR sowie über die Abnahme der ν(C=C, (Meth)acryl)-Bande (1639 $cm^{-1}$) sowie die Bildung und Zunahme der ν(C=C, Norbornenyl)-Bande (1577 $cm^{-1}$) mittels Raman-Spektroskopie verfolgt werden. Die flüchtigen Bestandteile wie z. B. unumgesetztes Cyclopentadien werden im Ölpumpenvakuum bei Temperaturen bis zu 90°C abgezogen. Es resultiert ein flüssiges Harz mit einer Viskosität von ca. 185 Pa·s bei 25°C. Eine weitere Aufarbeitung ist in der Regel nicht erforderlich.

Beispiel 8

("Umsetzung 6", ausgehend von Basisharz II gemäß Beispiel 5)

Zur Vorlage von 92,4 g (0,03 mol) Basisharz II werden unter Rühren bei ca. 50°C ca. 22,0 g (0,33 mol) CP zugetropft. Nach Erhitzen der Reaktionsmischung auf ca. 90°C werden unter Rühren 39,2 g (0,59 mol) CP zudestilliert und danach noch ca. 1,5 h bei 90°C weitergerührt. Die flüchtigen Bestandteile wie z. B. unumgesetztes Cyclopentadien werden im Ölpumpenvakuum bei Temperaturen bis zu 90°C abgezogen. Es resultiert ein flüssiges Harz mit einer Viskosität von ca. 380 Pa·s bei 25°C. Eine weitere Aufarbeitung ist in der Regel nicht erforderlich.

Beispiel 9

("Umsetzung 6", ausgehend von Basisharz II gemäß Beispiel 6)

Zur Vorlage von 111,5 g (0,35 mol) Basisharz II werden unter Rühren bei ca. 50°C ca. 33,3 g (0,50 mol) CP zugetropft. Nach Erhitzen der Reaktionsmischung auf ca. 90°C werden unter Rühren 50,5 g (0,77 mol) CP zudestilliert und danach noch ca. 1 h bei 90°C weitergerührt. Die flüchtigen Bestandteile wie z. B. unumgesetztes Cyclopentadien werden im Ölpumpenvakuum bei Temperaturen bis zu 90°C abgezogen. Es resultiert ein flüssiges Harz mit einer Viskosität von ca. 1030 Pa·s bei 25°C. Eine weitere Aufarbeitung ist in der Regel nicht erforderlich.

Beispiel 10

Synthese von Basisharz III

Zur Vorlage von 203 g (0,816 mol) 3-Glycidyloxypropyltrimethoxysilan werden unter trockener Atmosphäre 4,2g (0,016 mol) Triphenylphosphin als Kat., 0,2 Gew.-% BHT als Stabilisator und anschließend 74,9 g (1,04 mol) Acrylsäure zugetropft und bei ca. 85°C gerührt (ca. 24 h). Die Umsetzung kann über die Abnahme der Carbonsäurekonzentration mittels Säuretitration sowie dem Epoxidumsatz mittels Ramanspektroskopie/Epoxidtitration verfolgt werden. Die für die Epoxidgruppe vom Epoxysilan charakteristische Bande erscheint im Ramanspektrum bei 1256 $cm^{-1}$. Nach Zugabe von Essigester (1000 ml/mol Silan) und $H_2O$ zur Hydrolyse mit HCl als Kat. wird bei 30°C gerührt. Der Verlauf der Hydrolyse wird jeweils durch Wassertitration verfolgt. Die Aufarbeitung erfolgt nach mehrtägigem Rühren durch mehrmaliges Ausschütteln mit wässriger NaOH und mit Wasser und Filtration über hydrophobierten Filter. Es wird zunächst abrotiert und anschließend mit Ölpum-penvakuum abgezogen. Es resultiert ein flüssiges Harz ohne Einsatz von Reaktivverdünnern (Monomeren) mit einer sehr geringen Viskosität von ca. 4 Pa·s bei 25°C.

Beispiel 11

("Umsetzung 11", Synthese von Basisharz IV unter Verwendung eines knappen Unterschusses an Acrylsäurechlorid)

Zur Vorlage von 115,2 g (0,45 mol) Basisharz III und 45,1 g Triethylamin (0,345 mol) in 450 ml THF als Lösungsmittel werden unter trockener Atmosphäre und Kühlung mittels Eisbad unter Rühren 36,7 g (0,405 mol) Acrylsäurechlorid zugetropft und bei RT weitergerührt. Die Umsetzung kann mittels NMR sowie über die Abnahme der Säurechlorid-Bande mittels IR-Spektrum verfolgt werden. Nach üblicher Aufarbeitung zur Abtrennung des bei der Addition entstehenden Aminhydrochlorids und säurehaltiger Nebenprodukte sowie Abziehen der flüchtigen Bestandteile

mit Ölpumpenvakuum resultiert ein flüssiges Harz mit einer Viskosität von ca. 2,4 Pa·s bei 25°C.

Beispiel 12:

("Umsetzung 12"; Umsetzung des Basisharzes IV mit Cyclopentadien)

Zur Vorlage von 94,4 g (0,323 mol) Basisharz IV werden unter Rühren bei ca. 50°C ca. 20,3 g (0,31 mol) Cyclopentadien (CP) (durch Spaltung von Dicyclopentadien frisch hergestellt) zudestilliert und danach noch ca. 1 h bei 50°C weitergerührt. Die Umsetzung kann mittels NMR sowie über die Abnahme der ν(C=C, Acryl)-Bande (1638 $cm^{-1}$) sowie die Bildung und Zunahme der ν(C=C, Norbornenyl)-Bande (1576 $cm^{-1}$) mittels Raman-Spektroskopie verfolgt werden. Die flüchtigen Bestandteile wie z. B. unumgesetztes Cyclopentadien werden im Ölpumpenvakuum bei Temperaturen bis zu 50°C abgezogen. Es resultiert ein flüssiges Harz mit einer Viskosität von ca. 131 Pa·s bei 25°C (stark abhängig von den genauen Synthese- und Aufarbeitungsbedingungen auch der Vorstufen). Eine weitere Aufarbeitung ist in der Regel nicht erforderlich.

## Patentansprüche

1. Kieselsäure(hetero)polykondensat, umfassend Struktureinheiten der nachfolgenden Formel (1)

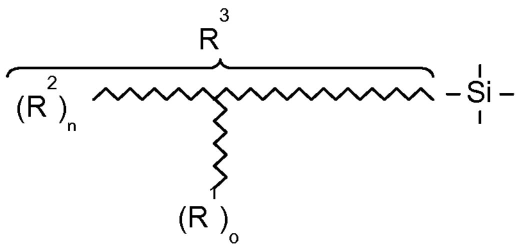

(1)

worin die Reste, Indices und Bindungs-Symbole die folgende Bedeutung besitzen:

$R^1$ bezeichnet eine Gruppe, die bei Zusatz eines Thiols einer Thiol-en-Polyaddition zugänglich ist und außerdem durch eine ROMP (ring opening metathese polymerization) polymerisiert werden kann,
$R^2$ ist ausgewählt unter
(a) organisch polymerisierbaren Gruppen, die bei Zusatz eines Thiols einer Thiol-en-Polyaddition zugänglich sind, aber keiner ROMP zugänglich sind,
(b) $-COOR^8$ mit $R^8$ gleich $R^4$ oder $M^{x+}_{1/x}$,
(c) -OH oder COOH, und
(d) $-(O)_bP(O)(R^5)_2$ worin b gleich 0 oder 1 ist, $-SO_3M^{x+}_{1/x}$, $NR^7_2$ oder $NR^7_3{}^+$,
wobei
$M^{x+}$ ein x-fach positiv geladenes Metallkation ist,
$R^4$ ein unsubstituierter oder substituierter Kohlenwasserstoffrest ist,
die Reste $R^5$ unabhängig voneinander einen unsubstituierten oder substituierten Kohlenwasserstoffrest oder $OR^6$ bedeuten und
$R^6$ Wasserstoff oder ein unsubstituierter oder substituierter Kohlenwasserstoffrest ist,
$R^7$ entweder dieselbe Bedeutung wie $R^4$ hat oder zwei Reste $R^7$ zusammen eine zweibindige, substituierte oder unsubstituierte, gesättigte oder ungesättigte Kohlenwasserstoffgruppe bedeuten,
$R^3$ bezeichnet einen über ein Kohlenstoffatom an das Siliciumatom der Formel (1) gebundenen Rest, an den der Rest $R^1$ o-fach und der Rest $R^2$ n-fach angebunden vorliegt und der in ein und demselben Kondensat gleich ist oder unterschiedliche Bedeutungen hat,
jeder der Indices n und o bedeutet 0, 1, 2 oder größer 2 mit der Maßgabe, dass n + o mindestens 2 bedeuten, mindestens eine der drei nicht näher gekennzeichneten Bindungen des Si-Atom steht für eine Sauerstoffbrücke zu einem weiteren Siliciumatom oder gegebenenfalls zu einem anderen Metallatom, während die anderen beiden Bindungen entweder dieselbe Bedeutung haben oder statt dessen für eine OH-Gruppe, eine hydrolysierbare Gruppe oder für einen über Kohlenstoff an das Siliciumatom gebundenen Rest stehen,
wobei

jeder Rest $R^3$ der Struktur (1) mindestens eine Gruppe $R^1$ oder eine Gruppe $R^2$ mit der unter (a) angegebenen Bedeutung aufweisen muss und
dann, wenn die Reste $R^3$ gleich sind,

(x) jeder Rest mindestens eine Gruppe $R^1$ und entweder eine Gruppe $R^2$ mit der unter (a) angegebenen Bedeutung oder eine zweite Gruppe $R^1$ aufweist (d.h. in diesen Fällen ist o = 2 oder größer 2), wobei in beiden Fällen n mindestens 1 sein muss, oder
(xx) wenn außerdem n gleich 0 ist, mindestens zwei Gruppen $R^1$ eine unterschiedliche Bedeutung besitzen, und

dann, wenn die Reste $R^3$ unterschiedlich sind, ein erster Teil der Reste mindestens eine Gruppe $R^1$ aufweist und eine der beiden folgenden Bedingungen eingehalten sein muss:

(x) ein weiterer Teil der Reste weist mindestens eine Gruppe $R^2$ mit der unter (a) oder (d) angegebenen Bedeutung auf, und
(xx) zwei verschiedene Reste $R^3$ weisen jeweils mindestens eine Gruppe $R^1$ auf.

**2.** Kieselsäure(hetero)polykondensat nach Anspruch 1, worin jeder Rest $R^3$ mindestens zwei unterschiedlich reaktive organisch polymerisierbare Gruppen aufweist, von denen mindestens eine solche Gruppe einer ROMP zugänglich ist.

**3.** Kieselsäure(hetero)polykondensat nach Anspruch 1, worin unterschiedliche Reste $R^3$ vorhanden sind, die jeweils mindestens eine Gruppe $R^1$ sowie mindestens eine Gruppe $R^2$ aufweisen, wobei sich zumindest die Gruppen $R^2$ in unterschiedlichen Resten $R^3$ voneinander unterscheiden.

**4.** Kieselsäure(hetero)polykondensat nach Anspruch 1,worin jeder Rest $R^3$ mindestens zwei Gruppen $R^1$ neben einer weiteren Gruppe $R^2$ aufweist, die in unterschiedlichen Resten $R^3$ unterschiedlich sein kann.

**5.** Kieselsäure(hetero)polykondensat nach einem der voranstehenden Ansprüche mit unterschiedlichen Resten $R^3$, worin in einem ersten Teil der Reste $R^3$ $n \geq 1$ und $o \geq 1$ ist und in einem zweiten Teil der Reste $R^3$ $n \geq 2$ und o gleich 0 ist.

**6.** Kieselsäure(hetero)polykondensat nach einem der voranstehenden Ansprüche, worin $R^1$ ausgewählt ist unter Gruppen

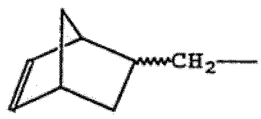
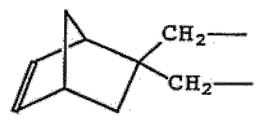

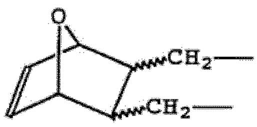
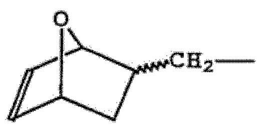

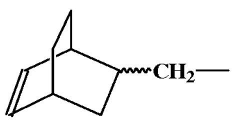
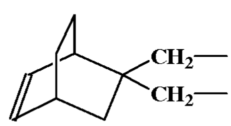

und/oder $R^2$ ausgewählt ist unter C=C-doppelbindungshaltigen Gruppen, die einer Thiol-en-Addition zugänglich sind.

**7.** Kieselsäure(hetero)polykondensat nach einem der voranstehenden Ansprüche, enthaltend mindestens zwei unterschiedliche Gruppen $R^2$, von denen eine aus der unter (a) angegebenen Gruppe ausgewählt ist und eine zweite unter den Mitgliedern der unter (b) bis (d) angegebenen Gruppen ausgewählt ist, wobei die zweite der Gruppen $R^2$ vorzugsweise die Bedeutung OH hat.

**8.** Verfahren zum Herstellen eines Kieselsäure(hetero)polykondensats, enthaltend Struktureinheiten der nachfolgen-

den Formel (1):

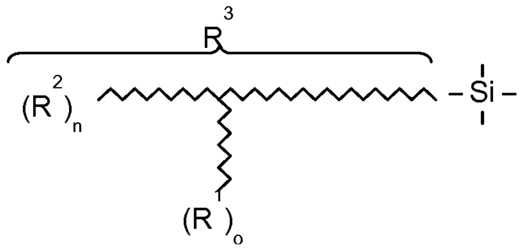

(1)

worin die Reste, Indices und Bindungs-Symbole die folgende Bedeutung besitzen:

$R^1$ bezeichnet eine Gruppe, die bei Zusatz eines Thiols einer Thiol-en-Polyaddition zugänglich ist und außerdem durch eine ROMP (ring opening metathese polymerization) polymerisiert werden kann,
$R^2$ ist ausgewählt unter
(a) organisch polymerisierbaren Gruppen, die bei Zusatz eines Thiols einer Thiol-en-Polyaddition zugänglich sind, aber keiner ROMP zugänglich sind,
(b) $-COOR^8$ mit $R^8$ gleich $R^4$ oder $M^{x+}_{1/x}$,
(c) -COOH oder -OH, und
(d) $-(O)_bP(O)(R^5)_2$, worin b gleich 0 oder 1 ist, $-SO_3M^{x+}_{1/x}$, $NR^7_2$ oder $NR^7_3{}^+$,
wobei
$M^{x+}$ ein x-fach positiv geladenes Metallkation ist,
$R^4$ ein unsubstituierter oder substituierter Kohlenwasserstoffrest ist,
die Reste $R^5$ unabhängig voneinander einen unsubstituierten oder substituierten Kohlenwasserstoffrest oder $OR^6$ bedeuten und
$R^6$ Wasserstoff oder ein unsubstituierter oder substituierter Kohlenwasserstoffrest ist,
$R^7$ entweder dieselbe Bedeutung wie $R^4$ hat oder zwei Reste $R^7$ zusammen eine zweibindige, substituierte oder unsubstituierte, gesättigte oder ungesättigte Kohlenwasserstoffgruppe bedeuten,
$R^3$ bezeichnet einen über ein Kohlenstoffatom an das Siliciumatom der Formel (1) gebundenen Rest, an den der Rest $R^1$ o-fach und der Rest $R^2$ n-fach angebunden vorliegt und der in ein und demselben Kondensat gleich ist oder unterschiedliche Bedeutungen hat,
jeder der Indices n und o bedeutet 0, 1, 2 oder größer 2 mit der Maßgabe, dass n + o mindestens 2 bedeuten, mindestens eine der drei nicht näher gekennzeichneten Bindungen des Si-Atom steht für eine Sauerstoffbrücke zu einem weiteren Siliciumatom oder gegebenenfalls zu einem anderen Metallatom, während die anderen beiden Bindungen entweder dieselbe Bedeutung haben oder statt dessen für eine OH-Gruppe, eine hydrolysierbare Gruppe oder für einen über Kohlenstoff an das Siliciumatom gebundenen Rest stehen,
wobei
jeder Rest $R^3$ der Struktur (1) mindestens eine Gruppe $R^1$ oder eine Gruppe $R^2$ mit der unter (a) angegebenen Bedeutung aufweisen muss und
dann, wenn die Reste $R^3$ gleich sind, jeder Rest $R^3$ mindestens eine Gruppe $R^1$ aufweist und dann, wenn die Reste $R^3$ unterschiedlich sind, ein erster Teil der Reste $R^3$ mindestens eine Gruppe $R^1$ aufweist,
**dadurch gekennzeichnet, dass** ein Kieselsäure(hetero)polykondensat, das Struktureinheiten (2) aufweist,

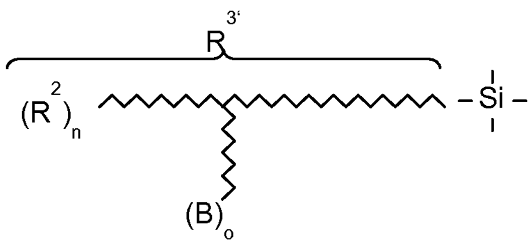

(2)

in denen die Gruppe $R^2$ und die Indices n und o sowie die Bindungen des Siliciumatoms wie für die Struktureinheit (1) definiert sind und $R^{3'}$ einen über ein Kohlenstoffatom an das Siliciumatom der Formel (1) gebundenen Rest bezeichnet, an den der Rest B o-fach und der Rest $R^2$ n-fach angebunden vorliegt und der in ein und demselben

Kondensat gleich ist oder unterschiedliche Bedeutungen hat, oder dass ein Silan mit der Formel (2), worin die Gruppe $R^2$ und die Indices n und o wie für die Struktureinheit (1) definiert sind und die drei Bindungen des Silciumatoms für eine OH-Gruppe, eine hydrolysierbare Gruppe oder für einen über Kohlenstoff an das Siliciumatom gebundenen Rest stehen und $R^{3'}$ einen über ein Kohlenstoffatom an das Siliciumatom der Formel (1) gebundenen Rest bezeichnet, an den der Rest $R^1$ o-fach und der Rest $R^2$ n-fach angebunden vorliegt, wobei B in allen Fällen eine geradkettige oder verzweigte organische Gruppe mit mindestens einer C=C-Doppelbindung ist, mit einem Reagens (Y) umsetzt wird, das ausgewählt ist unter Cyclopentadien, Furan, Cyclohexadien sowie Materialien, aus denen in situ eine dieser drei Verbindungen entstehen kann.

**9.** Verfahren nach Anspruch 8 zur Herstellung eines Kieselsäure(hetero)polykondensats, umfassend Struktureinheiten der Formel (1) wie in einem der Ansprüche 1 bis 8 definiert.

**10.** Verfahren nach einem der Ansprüche 8 und 9, **dadurch gekennzeichnet, dass** als Ausgangsmaterial mit der Struktur (2) ein Kieselsäure(hetero)polykondensat eingesetzt wird, in dem unterschiedliche Reste $R^{3'}$ vorhanden sind, wobei ein erster Teil der Reste mindestens eine Gruppe B aufweist und eine der beiden folgenden Bedingungen eingehalten sein muss:

(x) ein weiterer Teil der Reste weist mindestens eine Gruppe $R^2$ mit der unter (a) oder (d) angegebenen Bedeutung auf,
(xx) zwei verschiedene Reste $R^3$ weisen jeweils mindestens eine Gruppe B auf, die vorzugsweise an den unterschiedlichen Resten $R^{3'}$ unterschiedlich sind.

**11.** Verfahren nach einem der Ansprüche 8 und 9, **dadurch gekennzeichnet, dass** als Ausgangsmaterial mit der Struktur (2) ein Silan oder verschiedene Silane eingesetzt wird/werden, und das oder die Silane im Anschluss an die Umsetzung mit dem Reagens (Y) einer hydrolytischen Co-Kondensation unterworfen werden, wobei eine der folgenden Bedingungen eingehalten sein muss:

(x) die verschiedenen Silane werden mit demselben Reagens (Y) umgesetzt, wobei die Co-Kondensation vor, während oder nach der Umsetzung mit (Y) erfolgt, oder
(xx) das Silan wird in zwei oder mehrere Chargen aufgeteilt und jede dieser Chargen wird getrennt mit einem unterschiedlichen Reagens (Y) umgesetzt, worauf die erhaltenen Silane cokondensiert werden.

**12.** Verfahren nach einem der Ansprüche 8 bis 11, **dadurch gekennzeichnet, dass** das Reagens (Y) in Relation zu den vorhandenen Gruppen B im Unterschuss eingesetzt wird.

**13.** Verfahren zum organischen Polymerisieren eines Kieselsäure(hetero)polykondensats nach einem der Ansprüche 1 bis 7, **dadurch gekennzeichnet, dass** die Gruppen $R^1$ einer ROMP unterworfen werden.

**14.** Verfahren zum organischen Polymerisieren eines Kieselsäure(hetero)polykondensats nach einem der Ansprüche 1 bis 7, welches Gruppen $R^2$ mit der unter (a) angegebenen Bedeutung enthält, **dadurch gekennzeichnet, dass** das Kondensat mit einem Di- oder Polythiol umgesetzt wird oder dass die in den Gruppen $R^2$ enthaltenen C=C-Doppelbindungen polymerisiert (polyaddiert) werden.

**15.** Verfahren zum Modifizieren eines Kieselsäure(hetero)polykondensats nach einem der Ansprüche 1 bis 8, welches Gruppen $R^2$ mit der unter (c) angegebenen Bedeutung enthält, **dadurch gekennzeichnet, dass** es mit einem Isocyanat oder einer epoxygruppenhaltigen Verbindung oder, nur im Falle von $R^2$ gleich OH, mit einer (aktivierten) Carbonsäure umgesetzt wird, wobei das Isocyanat, die epoxygruppenhaltige Verbindung oder die (aktivierte) Carbonsäure relativ zur Menge der vorhandenen Gruppen R vorzugsweise im Unterschuss eingesetzt wird.

## Claims

**1.** Silicic acid (hetero) polycondensate comprising structural units having the following formula (1)

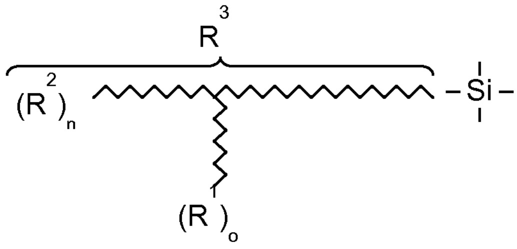

(1)

in which the radicals, indices, and bonding symbols have the following meaning:

$R^1$ refers to a group that is susceptible to a thiol-ene polyaddition when a thiol is added and can also be polymerized by a ROMP (ring opening metathesis polymerization),
$R^2$ is selected from
(a)organically polymerizable groups susceptible to a thiol-ene polyaddition when a thiol is added, but not to a ROMP,
(b) $-COOR^8$ with $R^8$ equal to $R^4$ or $M^{x+}_{1/x}$ ,
(c) -OH or COOH, and
(d) $-(O)_bP(O)(R^5)_2$, in which b is equal to 0 or 1, $-SO_3M^{x+}_{1/x}$, $NR^7_2$ or $NR^7_3{}^+$,
wherein
$M^{x+}$ is an x-fold positively charged metal cation,
$R^4$ is a non-substituted or substituted hydrocarbon radical,
the radicals $R^5$ independently represent a non-substituted or substituted hydrocarbon radical or $OR^6$, and
$R^6$ is hydrogen or a non-substituted or substituted hydrocarbon radical,
$R^7$ has either the same meaning as $R^4$ or two radicals $R^7$ together represent a divalent,
substituted or non-substituted, saturated or unsaturated hydrocarbon group,
$R^3$ represents a radical bonded to a silicon atom of said formula (1) by a carbon atom, to which said radical $R^1$ is bonded o-fold and said radical $R^2$ is bonded n-fold and which is equivalent or has different meanings in the same condensate,
each of the indices, n and o represents 0, 1, 2 or greater than 2 with the stipulation that n + o represents at least 2,
at least one of the three bonds of a Si atom not further identified represents an oxygen bridge to an additional silicon atom or potentially to another metal atom, while the other two bonds either have the same meaning or instead represent an OH group, a hydrolysable group, or a radical bonded to the silicon atom via carbon,
wherein
each radical $R^3$ of said structure (1) must have at least one group $R^1$ or one group $R^2$ having the meaning specified in (a) and
then, if said radicals $R^3$ are equal,

(x) each radical has at least one group $R^1$ and either one group $R^2$ with the meaning specified in (a) or a second group $R^1$ (i.e. in these cases, o = 2 or greater than 2), whereas in both cases, n must be at least 1, or
(xx) if, in addition, n is equal to 0, at least two groups $R^1$ have a different meaning, and

then, if said radicals $R^3$ are different, a first part of the radicals has at least one group $R^1$ and one of the following two conditions must be complied with:

(x) an additional part of the radicals has at least one group $R^2$ with the meaning specified in (a) or (d), and
(xx) two different radicals $R^3$ have at least one group $R^1$ (i.e. o = 1 or greater than 1).

**2.** Silicic acid (hetero) polycondensate according to Claim 1, in which each radical $R^3$ has at least two different reactive organically polymerizable groups, from which at least one such group is accessible to a ROMP.

**3.** Silicic acid (hetero) polycondensate according to Claim 1, in which different radicals $R^3$ are present, which have at least one group $R^1$ as well as at least one group $R^2$, wherein at least said groups $R^2$ differ from each other in different radicals $R^3$.

**4.** Silicic acid (hetero) polycondensate according to Claim 1, in which each radical $R^3$ has at least two groups $R^1$ in

addition to another group $R^2$, which may be different in different radicals $R^3$.

**5.** Silicic acid (hetero) polycondensate according to one of the previous Claims with different radicals $R^3$, in which $n \geq 1$ and $o \geq 1$ in a first part of said radicals $R^3$ and $n \geq 2$ and o is equal to 0 in a second part of said radicals $R^3$.

**6.** Silicic acid (hetero) polycondensate according to one of the previous Claims, in which $R^1$ is selected from groups

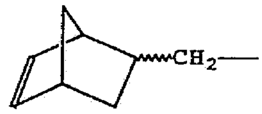 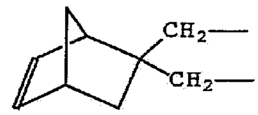

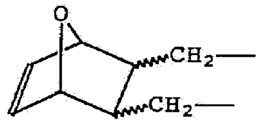 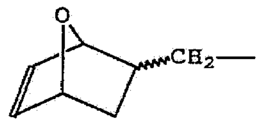

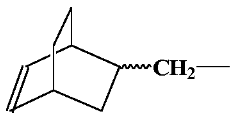 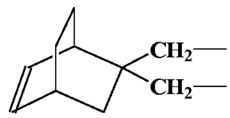

and/or $R^2$ is selected from groups containing C=C double bonds susceptible to a thiol-ene addition.

**7.** Silicic acid (hetero) polycondensate according to one of the previous Claims containing at least two different groups $R^2$, from which one is selected from the groups specified in (a) and a second is selected from the members of the groups specified in (b) to (d), wherein the second of the groups $R^2$ is preferably OH.

**8.** A process for the production of a silicic acid (hetero) polycondensate containing structural units having the following formula (1):

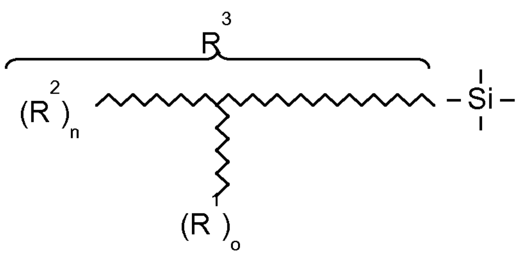 (1)

in which the radicals, indices, and bonding symbols have the following meaning:

$R^1$ refers to a group that is susceptible to a thiol-ene polyaddition when a thiol is added and can also be polymerized by a ROMP (ring opening metathesis polymerization),
$R^2$ is selected from
(a)organically polymerizable groups susceptible to a thiol-ene polyaddition when a thiol is added, but not to a ROMP,
(b) $-COOR^8$ with $R^8$ equal to $R^4$ or $M^{x+}_{1/x}$,
(c) -OH or COOH, and
(d) $-(O)_bP(O)(R^5)_2$, in which b is equal to 0 or 1, $-SO_3M^{x+}_{1/x}$, $NR^7_2$ or $NR^7_3{}^+$,
wherein
$M^{x+}$ is an x-fold positively charged metal cation,
$R^4$ is a non-substituted or substituted hydrocarbon radical,
the radicals $R^5$ independently represent a non-substituted or substituted hydrocarbon radical or $OR^6$, and
$R^6$ is hydrogen or a non-substituted or substituted hydrocarbon radical,
$R^7$ has either the same meaning as $R^4$ or two radicals $R^7$ together represent a divalent,

substituted or non-substituted, saturated or unsaturated hydrocarbon group,
$R^3$ represents a radical bonded to a silicon atom of said formula (1) by a carbon atom, to which said radical $R^1$ is bonded o-fold and said radical $R^2$ is bonded n-fold and which is equivalent or has different meanings in the same condensate,
each of the indices, n and o represents 0, 1, 2 or greater than 2 with the stipulation that n + o represents at least 2, at least one of the three bonds of a Si atom not further identified represents an oxygen bridge to an additional silicon atom or potentially to another metal atom, while the other two bonds either have the same meaning or instead represent an OH group, a hydrolysable group, or a radical bonded to the silicon atom via carbon, wherein
each radical $R^3$ of said structure (1) must have at least one group $R^1$ or one group $R^2$ having the meaning specified in (a) and
then, if said radicals R3 are equal, each radical $R^3$ has at least one group $R^1$ and then, if said radicals $R^3$ are different, a first part of said radicals $R^3$ has at least one group $R^1$, **characterized in that**
a silicic acid (hetero) polycondensate having structural units (2),

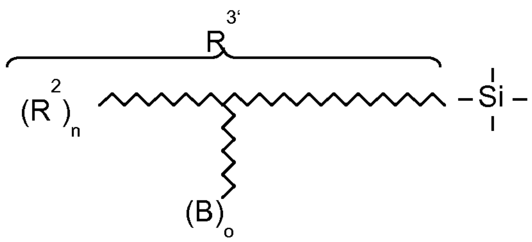

(2)

in which said groups $R^2$ and said indices n and o as well as said bonds of said silicon atom are defined as for the structural unit (1), and $R^{3'}$ designates a radical bonded to said silicon atom of said formula (1) via a carbon atom, to which said radical B is bonded o-fold and the radical $R^2$ is bonded n-fold and which is identical or has different meanings in the same condensate,
or wherein said silane with said formula (2), in which the group $R^2$ and the indices n and o are defined for the structural unit (1) and the three bonds of said silicon atom represent an OH group, a hydrolysable group or a radical bonded to said silicon atom via a carbon atom, and $R^{3'}$ represents a radical bonded to the silicon atom of formula (1) via a carbon atom, to which said radical $R^1$ is bonded o-fold and the radical $R^2$ n-fold, wherein, in all cases, B is a straight-chain or branched organic group having at least one C=C double bond,
is reacted with a reagent (Y), which is selected from cyclopentadiene, furan,
cyclohexadiene as well as materials, from which one of these three compounds may emerge in situ.

**9.** Process according to Claim 8, for the production of a silicic acid (hetero) polycondensate comprising structural units of said formula (1) as defined in one of the Claims 1 to 8.

**10.** Process according to any one of the Claims 8 and 9, wherein a silicic acid (hetero) polycondensate is used as a starting material having said structure (2), in which different radicals $R^{3'}$ are present, wherein a first part of said radicals has at least one group B and one of the two following conditions must be complied with:

(x) an additional part of the radicals has at least one group $R^2$ with the meaning specified in (a) or (d),
(xx) two different radicals $R^3$ each have at least one group B, which preferably is different at the different radicals $R^{3'}$.

**11.** Process according to any one of the Claims 8 und 9, wherein a silane or different silanes is/are used as the starting material having the structure (2), and said silane or silanes is/are subjected to a hydrolytic co-condensation following the reaction with the reagent (Y), wherein one of the following conditions must be complied with:

(x) said different silanes are reacted with the same reagent (Y), wherein the co-condensation occurs prior to, during or after the reaction with (Y), or
(xx) said silane is divided into two or more batches and each of these batches is separately reacted with a different reagent (Y), upon which the obtained silanes are co-condensed.

**12.** Process according to any one of the Claims 8 bis 11, wherein said reagent (Y) is used substoichiometrically in relation to the present groups B.

**13.** Process for the organic polymerization of a silicic acid (hetero) polycondensate according to one of the Claims 1 to 8, wherein said groups $R^1$ are subjected to a ROMP.

**14.** Process for the organic polymerization of a silicic acid (hetero) polycondensate according to any one of the Claims 1 to 7 containing groups $R^2$ having the meaning specified in (a), **characterized in that** the condensate is converted with a di or polythiol, or that the C=C double bonds contained in said groups $R^2$ are polymerized (polyaddition).

**15.** Process for the modification of a silicic acid (hetero) polycondensate according to any one of the Claims 1 to 8, which contains groups $R^2$ having the meaning specified in (a), **characterized in that** it is reacted with an isocyanate or a compound containing epoxy groups or, exclusively in the case of $R^2$ equal to OH, with an (activated) carboxylic acid, wherein said isocyanate, said compound containing epoxy groups or said (activated) carboxylic acid is preferably used substoichiometrically relative to the amount of the present groups R.

## Revendications

**1.** (Hétéro)polycondensat d'acide silicique, comprenant des unités structurales de la formule suivante (1):

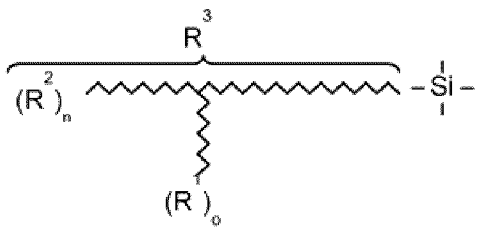

(1)

dans laquelle les radicaux, indices et symboles de liaison possèdent la signification suivante:

$R^1$ désigne un groupe, qui par ajout d'un thiol est accessible à une polyaddition de thiol-ène et qui peut par ailleurs être polymérisé par une ROMP (polymérisation par ouverture de cycle par métathèse),
$R^2$ est sélectionné parmi
(a) des groupes organiquement polymérisables, qui par ajout d'un thiol sont accessibles à une polyaddition de thiol-ène, mais ne sont pas accessibles à une ROMP,
(b) -$COOR^8$, avec $R^8$ égal à $R^4$ ou à $M^{x+}_{1/x}$,
(c) -OH ou COOH, et
(d) -$(O)_bP(O)R^5)_2$, où b vaut 0 ou 1, $-SO_3M^{x+}_{1/x}$, $NR^7_2$ ou $NR^7_3{}^+$,
dans lequel
$M^{x+}$ est un cation métallique à x charges positives,
$R^4$ est un radical hydrocarboné non substitué ou substitué,
les radicaux $R^5$ signifient indépendamment l'un de l'autre un radical hydrocarboné non substitué ou substitué ou $OR^6$ et
$R^6$ est un atome d'hydrogène ou un radical hydrocarboné non substitué ou substitué,
$R^7$ ou bien a la même signification que $R^4$ ou bien deux radicaux $R^7$ ensemble signifient un groupe hydrocarboné à liaison double, substitué ou non substitué, saturé ou non saturé,
$R^3$ désigne un radical lié par un atome de carbone à l'atome de silicium de la formule (1), auquel le radical $R^1$ est lié o fois et le radical $R^2$ est lié n fois et qui dans un seul et même condensat est identique ou a différentes significations,
chacun des indices n et o signifie 0, 1, 2 ou plus de 2 avec la condition que n + o valent au moins 2,
au moins une des trois liaisons non caractérisées en détail de l'atome de Si représente un pont d'oxygène vers un autre atome de Si ou éventuellement vers un autre atome métallique, tandis que les deux autres liaisons ou bien ont la même signification ou bien au lieu de celle-ci représentent un groupe -OH, un groupe hydrolysable ou un radical lié par un carbone à l'atome de silicium,
dans lequel
chaque radical $R^3$ de la structure (1) doit présenter au moins un groupe $R^1$ ou un groupe $R^2$ avec la signification indiquée sous (a) et

lorsque les radicaux $R^3$ sont identiques,

(x) chaque radical présente au moins un groupe $R^1$ et ou bien un groupe $R^2$ avec la signification indiquée sous (a) ou bien un deuxième groupe $R^1$ (c'est-à-dire que dans ces cas o = 2 ou > 2), n devant dans les deux cas valoir au moins 1, ou
(xx) lorsque par ailleurs n = 0, au moins deux groupes $R^1$ possèdent une signification différente, et

lorsque les radicaux $R^3$ sont différents, une première partie des radicaux présente au moins un groupe $R^1$ et une des deux conditions suivantes doit être remplie:

(x) une autre partie des radicaux présente au moins un groupe $R^2$ avec la signification indiquée sous (a) ou (d), et
(xx) deux radicaux $R^3$ différents présentent respectivement au moins un groupe $R^1$.

**2.** (Hétéro)polycondensat d'acide silicique selon la revendication 1, dans lequel chaque radical $R^3$ présente au moins deux groupes différemment réactifs organiquement polymérisables, parmi lesquels un de ces groupes est accessible à une ROMP.

**3.** (Hétéro)polycondensat d'acide silicique selon la revendication 1, dans lequel il se trouve différents radicaux $R^3$, qui présentent respectivement au moins un groupe $R^1$ ainsi qu'au moins un groupe $R^2$, dans lequel au moins les groupes $R^2$ se différencient l'un de l'autre par différents radicaux $R^3$.

**4.** (Hétéro)polycondensat d'acide silicique selon la revendication 1, dans lequel chaque radical $R^3$ présente au moins deux groupes $R^1$ en plus d'un autre groupe $R^2$, qui peut être différent dans différents radicaux $R^3$.

**5.** (Hétéro)polycondensat d'acide silicique selon l'une quelconque des revendications précédentes avec différents radicaux $R^3$, dans lequel dans une première partie des radicaux $R^3$ $n \geq 1$ et $o \geq 0$ et dans une deuxième partie des radicaux $R^3$ $n \geq 2$ et o = 0.

**6.** (Hétéro)polycondensat d'acide silicique selon l'une quelconque des revendications précédentes, dans lequel $R^1$ est sélectionné parmi les groupes

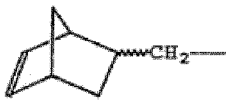 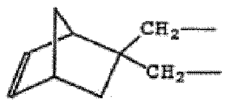

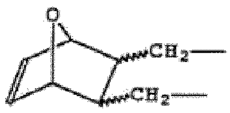 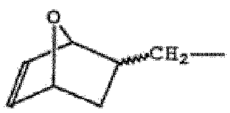

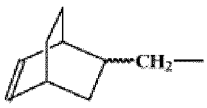 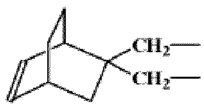

et/ou $R^2$ est sélectionné parmi des groupes contenant des doubles liaisons C=C, qui sont accessibles à une addition de thiol-ène.

**7.** (Hétéro)polycondensat d'acide silicique selon l'une quelconque des revendications précédentes, contenant au moins deux groupes $R^2$ différents, parmi lesquels l'un est sélectionné dans le groupe indiqué sous (a) et un deuxième est sélectionné parmi les membres des groupes indiqués sous (b) à (d), dans lequel le deuxième des groupes $R^2$ a de préférence la signification OH.

**8.** Procédé de fabrication d'un (hétéro)polycondensat d'acide silicique, contenant des unités structurales de la formule suivante (1):

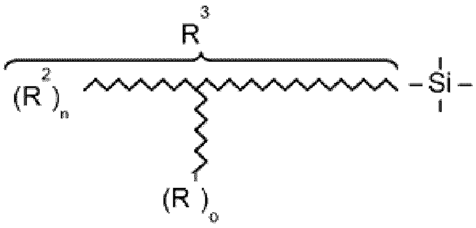

(1)

dans laquelle les radicaux, indices et symboles de liaison possèdent la signification suivante:

$R^1$ désigne un groupe, qui par ajout d'un thiol est accessible à une polyaddition de thiol-ène et qui peut par ailleurs être polymérisé par une ROMP (polymérisation par ouverture de cycle par métathèse),
$R^2$ est sélectionné parmi
(a) des groupes organiquement polymérisables, qui par ajout d'un thiol sont accessibles à une polyaddition de thiol-ène, mais ne sont pas accessibles à une ROMP,
(b) -$COOR^8$, avec $R^8$ égal à $R^4$ ou à $M_{1/x}^{x+}$,
(c) -COOH ou -OH, et
d) -$(O)_bP(O)R^5)_2$, où b vaut 0 ou 1, $NR^7_2$ ou $NR^7_3{}^+$,
dans lequel
$M^{x+}$ est un cation métallique à x charges positives,
$R^4$ est un radical hydrocarboné non substitué ou substitué,
les radicaux $R^5$ signifient indépendamment l'un de l'autre un radical hydrocarboné non substitué ou substitué ou $OR^6$ et
$R^6$ est un atome d'hydrogène ou un radical hydrocarboné non substitué ou substitué,
$R^7$ ou bien a la même signification que $R^4$ ou bien deux radicaux $R^7$ ensemble signifient un groupe hydrocarboné à liaison double, substitué ou non substitué, saturé ou non saturé,
$R^3$ désigne un radical lié par un atome de carbone à l'atome de silicium de la formule (1), auquel le radical $R^1$ est lié o fois et le radical $R^2$ est lié n fois et qui dans un seul et même condensat est identique ou a différentes significations,
chacun des indices n et o signifie 0, 1, 2 ou plus de 2 avec la condition que n + o valent au moins 2,
au moins une des trois liaisons non caractérisées en détail de l'atome de Si représente un pont d'oxygène vers un autre atome de Si ou éventuellement vers un autre atome métallique, tandis que les deux autres liaisons ou bien ont la même signification ou bien au lieu de celle-ci représentent un groupe -OH, un groupe hydrolysable ou un radical lié par un carbone à l'atome de silicium,
dans lequel
chaque radical $R^3$ de la structure (1) doit présenter au moins un groupe $R^1$ ou un groupe $R^2$ avec la signification indiquée sous (a) et
lorsque les radicaux $R^3$ sont identiques, chaque radical $R^3$ présente au moins un groupe $R^1$, et lorsque les radicaux $R^3$ sont différents, une première partie des radicaux $R^3$ présente au moins un groupe $R^1$,
**caractérisé en ce qu'**un (hétéro)polycondensat d'acide silicique, qui présente des unités structurales (2)

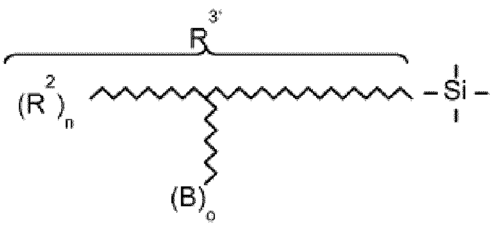

(2)

dans lesquelles le groupe $R^2$ et les indices n et o ainsi que les liaisons de l'atome de silicium sont définis comme pour l'unité structurale (1) et $R^3$ désigne un radical lié par un atome de carbone à l'atome de silicium de la formule (1), auquel le radical B est lié o fois et le radical $R^2$ est lié n fois et qui dans un seul et même condensat est identique ou a des significations différentes,
ou **en ce que** l'on fait réagir un silane de la formule (2), dans laquelle le groupe $R^2$ et les indices n et o sont définis comme pour l'unité structurale (1) et les trois liaisons de l'atome de silicium représentent un groupe OH,

un groupe hydrolysable ou un radical lié par un carbone à l'atome de silicium et $R^3$ désigne un radical lié par un carbone à l'atome de silicium de la formule (1), auquel le radical $R^1$ est lié o fois et le radical $R^2$ est lié n fois, dans lequel B est dans tous les cas un groupe organique à chaîne droite ou ramifié avec au moins une liaison double C=C, avec un réactif (Y), qui est sélectionné parmi le cyclopentadiène, le furane, le cyclohexadiène ainsi que des matériaux, à partir desquels une de ces trois liaisons peut apparaître in situ.

**9.** Procédé selon la revendication 8 pour la fabrication d'un (hétéro)polycondensat d'acide silicique comprenant des unités structurales de la formule (1), défini comme dans l'une quelconque des revendications 1 à 8.

**10.** Procédé selon une des revendications 8 ou 9, **caractérisé en ce que** l'on utilise comme matière première ayant la structure (2) un (hétéro)polycondensat d'acide silicique, dans lequel il se trouve différents radicaux $R^3$, dans lequel une première partie des radicaux présente au moins un groupe B et une des deux conditions suivantes doit être remplie:

(x) une autre partie des radicaux présente au moins un groupe $R^2$ avec la signification indiquée sous (a) ou (d),
(xx) deux radicaux $R^3$ différents présentent respectivement au moins un groupe B, qui sont de préférence différents sur les différents radicaux $R^{3'}$.

**11.** Procédé selon une des revendications 8 et 9, **caractérisé en ce que** l'on utilise comme matière première ayant la structure (2) un silane ou différents silanes, et on soumet le/les silane(s) à la suite de la réaction avec le réactif (Y) à une co-condensation hydrolytique, dans lequel une des conditions suivantes doit être remplie:

(x) on fait réagir les différents silanes avec le même réactif (Y), dans lequel la co-condensation est effectuée avant, pendant ou après la réaction avec (Y), ou
(xx) le silane est divisé en deux ou plusieurs charges, et on fait réagir chacune de ces charges séparément avec un réactif (Y) différent, puis on opère la co-condensation des silanes obtenus.

**12.** Procédé selon l'une quelconque des revendications 8 à 11, **caractérisé en ce que** l'on utilise le réactif (Y) en proportion insuffisante en relation avec les groupes B présents.

**13.** Procédé pour la polymérisation organique d'un (hétéro)polycondensat d'acide silicique selon l'une quelconque des revendications 1 à 7, **caractérisé en ce que** l'on soumet les groupes $R^1$ à une ROMP.

**14.** Procédé pour la polymérisation organique d'un (hétéro)polycondensat d'acide silicique selon l'une quelconque des revendications 1 à 7, qui contient des groupes $R^2$ avec la signification indiquée sous (a), **caractérisé en ce que** l'on fait réagir le condensat avec un di- ou un polythiol ou **en ce que** l'on polymérise (par polyaddition) les liaisons doubles C=C contenues dans les groupes $R^2$.

**15.** Procédé pour modifier un (hétéro)polycondensat d'acide silicique selon l'une quelconque des revendications 1 à 8, qui contient des groupes $R^2$ avec la signification indiquée sous (c), **caractérisé en ce qu'**on le fait réagir avec un isocyanate ou un composé contenant des groupes époxy ou, uniquement dans le cas où $R^2$ est égal à OH, avec un acide carboxylique (activé), dans lequel on utilise l'isocyanate, le composé contenant des groupes époxy ou l'acide carboxylique (activé) de préférence en proportion insuffisante par rapport à la quantité des groupes R présents.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4416857 C1
- DE 19627198
- DE 10349766 A1
- WO 2005040249 A
- DE 19627198 A1
- DE 4011044 A1
- DE 19910895 A1
- DE 10132654 A1
- DE 102011050672
- DE 19643781
- DE 19832965
- DE 10018405
- DE 10041038
- DE 102005018351
- DE 102005061965